# EUROPEAN PATENT APPLICATION

(11) **EP 4 694 327 A1**
(43) Date of publication of application: **11.02.2026**
(21) Application number: 24193748.1
(22) Date of filing: 08.08.2024
(51) Int. Cl.: H04W 36/00, H04W 24/10

(54) **REFERENCE RESOURCE CONFIGURATION FOR EVENT TRIGGERED L1 MEASUREMENT REPORTING**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP); DHANANJAYA, Harshith, 63225 Langen (DE)
(74) Representative: Grünecker Patent- und Rechtsanwälte PartG mbB

(57) **Abstract**

The present disclosure relates to a communication device, a base station and respective methods for a communication device and a base station. For example, the communication device comprises a circuitry and a transceiver. The circuitry, in operation, obtains, from a Layer 1/Layer 2 Triggered Mobility (LTM) control signalling, an LTM trigger event configuration indication. The LTM trigger event configuration indication indicates a configuration of an LTM trigger event that involves reference signals (RS(s)). The involved RS(s) include a serving cell RS and/or a candidate cell RS. The serving cell RS is an RS of a serving cell of the communication device. The candidate cell RS is an RS of an LTM candidate cell for an LTM cell switch of the communication device away from the serving cell. The communication device is to transmit, when the involved RS(s) satisfy a trigger condition of the LTM trigger event, a layer 1 (L1) measurement report for LTM on measurement result(s) of the involved RS(s). The circuitry determines, if the LTM trigger event involves the serving cell RS, the serving cell RS among configured RS(s) of the serving cell with which the communication device is configured based on (i) a serving cell RS indication included in the LTM trigger event configuration indication, and/or (ii) a current serving cell TCI state, wherein the current serving cell TCI state is a TCI state that is currently used by the communication device in the serving cell. Furthermore, the circuitry determines, if the LTM trigger event involves the candidate cell RS, the candidate cell RS among configured RS(s) of the candidate cell with which the communication device is configured based on (i) a candidate cell RS indication included in the LTM trigger event configuration indication, and/or (ii) the current serving cell TCI state. Furthermore, the circuitry determines, by evaluating whether the determined serving cell and/or determined candidate cell RS satisfy the trigger condition, whether to transmit the L1 measurement report. The transceiver, in operation, receives the LTM control signalling, and transmits, if it is determined that the L1 measurement report is to be transmitted, the L1 measurement report.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates an efficient and flexible signalling framework for indicating, by a scheduling device to a communication device, the reference signals (in the present disclosure also referred to as *"involved reference signals"*) based on which a given LTM trigger event is to be evaluated by the communication device. In other words, the beam(s) of the serving cell and the beam(s) of candidate cell(s) based on which the LTM trigger event is to be evaluated can be indicated efficiently. Furthermore, usage of multiple types of reference signals/beams, e.g. SSB and CSI-RS, may be enabled within/by the signalling framework while allowing to ensure that the serving cell RS and the candidate cell RS have the same RS type.

In an embodiment, the techniques disclosed here feature an apparatus (e.g. a communication device or user equipment, (UE)). The apparatus comprises a circuitry and a transceiver. The circuitry, in operation, obtains, from a Layer 1/Layer 2 Triggered Mobility (LTM) control signalling, an LTM trigger event configuration indication. In particular: (i) the LTM trigger event configuration indication indicates a configuration of an LTM trigger event that involves reference signals (RS(s)); (ii) the involved RS(s) include a serving cell RS and/or a candidate cell RS; (iii) the serving cell RS is an RS of a serving cell of the communication device; (iv) the candidate cell RS is an RS of an LTM candidate cell for an LTM cell switch of the communication device away from the serving cell; and (v) the communication device is to transmit, when the involved RS(s) satisfy a trigger condition of the LTM trigger event, a layer 1 (L1) measurement report for LTM on measurement result(s) of the involved RS(s). Furthermore, the circuitry, in operation, determines, if the LTM trigger event involves the serving cell RS, the serving cell RS among configured RS(s) of the serving cell with which the communication device is configured based on: (a) a serving cell RS indication included in the LTM trigger event configuration indication, and/or (b) a current serving cell TCI state, wherein the current serving cell TCI state is a TCI state that is currently used by the communication device in the serving cell. Furthermore, the circuitry, in operation, determines, if the LTM trigger event involves the candidate cell RS, the candidate cell RS among configured RS(s) of the candidate cell with which the communication device is configured based on (a) a candidate cell RS indication included in the LTM trigger event configuration indication, and/or (b) the current serving cell TCI state. Furthermore, the circuitry, in operation, determines, by evaluating whether the determined serving cell and/or determined candidate cell RS satisfy the trigger condition, whether to transmit the L1 measurement report. The transceiver, in operation: (i) receives the LTM control signalling; and (ii) transmits, if it is determined that the L1 measurement report is to be transmitted, the L1 measurement report.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: shows exemplary functional split options in 5G O-RAN to which exemplary embodiments of the present disclosure may be applied;
- **Fig. 3**: illustrates a split-gNB architecture, where a gNB is split into a gNB-central unit and one or more gNB-distributed units to which exemplary embodiments of the present disclosure may be applied;
- **Fig. 4**: illustrates a simplified signaling diagram for an intra-DU lower-layer cell switch;
- **Fig. 5**: illustrates a signaling diagram for CSI measurement and reporting;
- **Fig. 6**: illustrates an exemplary signalling procedure for L1 L2-triggered mobility;
- **Fig. 7**: is a block diagram of a communication system including a user equipment and a base station with their respective exemplary functional structures;
- **Fig. 8**: is a block diagram illustrating an exemplary functional structure of the processing circuitry at the user equipment side;
- **Fig. 9**: is a block diagram illustrating an exemplary functional structure of the processing circuitry at the base station side; and
- **Fig. 10**: is a flow chart illustrating exemplary steps performed by the user equipment as well as exemplary steps performed by the base station.

### DETAILED DESCRIPTION

### 5G NR system architecture and protocol stacks

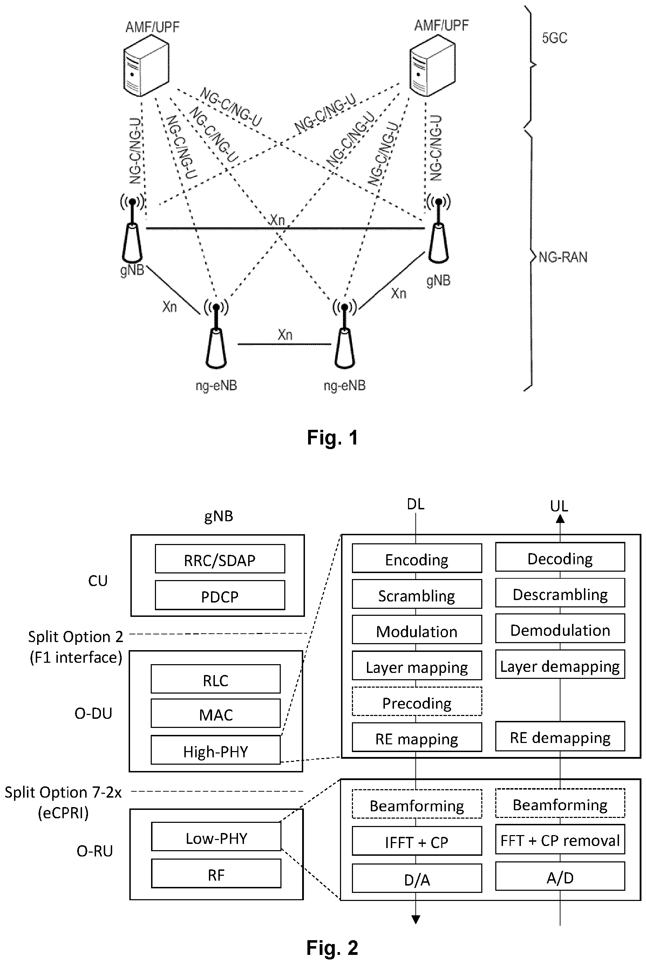

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### RRC connection setup and reconfiguration procedures

Interactions between a UE, gNB, and AMF (an 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 2** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

The PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Split gNB architecture

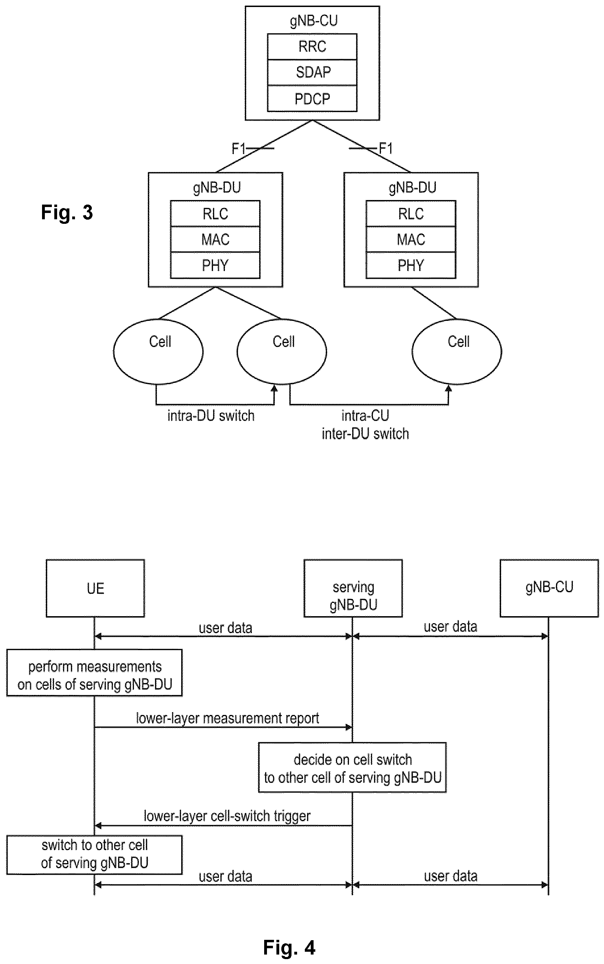

In the 3GPP standard, a gNB can be split into a gNB-CU (Central Unit) and one or more gNB-DUs (Distributed Units). This is illustrated in **Fig. 3**.

The gNB-CU is a logical node that provides support for the higher layers of the protocol stack such as SDAP, PDCP and RRC. On the other hand, the gNB-DU is a logical node that provides support for the lower layers of the protocol stack such as RLC, MAC and Physical layer. Also, note that SDAP layer will not be present if the CU is connected to a 4G Core network as we should have 5G core network to support SDAP.

Therefore, the PHY and MAC layers are terminated at the gNB-DU, while Layer 3 (RRC) is terminated at the gNB-CU.

There is a single CU for each gNB, i.e. one gNB-DU is connected to only one gNB-CU. Alternatively, for resiliency, a gNB-DU may be connected to multiple gNB-CUs. One gNB-CU may control multiple gNB-DUs, for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1 and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v17.3.0, e.g. section 6.1. The F1 interface is specified in more detail e.g. in 3GPP TS 38.473 v17.3.0.

### Layer-1-Layer-2-triggered mobility (LTM)

When the UE moves from the coverage area of one cell to another cell, at some point a serving cell change needs to be performed. According to one possibility, serving cell change is triggered by L3 measurements and is done by RRC signalling triggered Reconfiguration with Synchronisation for change of PCell and PSCell, as well as release or add SCells when applicable. Such a procedure may involve complete L2 (and L1) resets, leading to longer latency, larger overhead and longer interruption time than beam switch mobility.

In the 3GPP Rel. 18 work on mobility enhancements, supporting Layer-1-Layer-2-(also termed lower-layer) triggered mobility (LTM) is one of the topics. The UE is firstly configured by the RRC (L3) with a set of candidate cells. Then, L1- or L2 signalling (e.g. a MAC CE (and/or possibly a DCI) is used to trigger the switch of the UE's serving cell among the candidate cells without RRC reconfiguration. Put differently, to facilitate a sequential cell switch, the cell switch shall be prepared in a manner that no RRC reconfiguration is needed for the UE after the cell switch, regardless of which candidate cell as a target candidate cell becomes the new serving cell. The goal is to reduce latency, overhead and interruption time for the serving cell change. Intra-DU and intra-CU inter-DU cells switches are both within the scope of Rel.18. Fig. 3 illustrates the intra-DU switch between two cells of the same gNB-DU as well as the inter-DU switch between two cells of different gNB-DUs.

**Fig. 4** is a simplified and exemplary message exchange for an intra-DU lower-layer cell switch for according to the 3GPP Rel. 18 work. Correspondingly, it is exemplary assumed that the gNB-DU controls a plurality of cells, including the current serving cell of the UE. The gNB-DU is in connection with a gNB-CU.

As apparent therefrom, the cell switch is decided based on lower-layer (e.g. Layer 1 RSRP) measurements performed at the UE and reported to the gNB-DU. In more detail, the UE measures reference signals from one or more candidate cells of the gNB-DU and reports the results to the gNB-DU. The gNB-DU can use the received measurement results for determining whether to execute LTM to a candidate target cell or not. The lower-layer cell-switch trigger is transmitted to the UE, such that the UE can perform the switch from the current cell to another cell of the gNB-DU.

The benefit achieved by performing the measurement and reporting by Layer 1 is the low latency.

In Rel-18, LTM is limited to intra-CU, meaning that both serving cells and candidate cells including the target cell belong to the same gNB. But this should not be understood as the limitation of current disclosure. The disclosed concept is also applicable for the case of inter-gNB LTM, meaning that the serving cell and the target cell belong to different gNBs (for example, different gNB-CUs).

### Beam management (BM) & Transmission Configuration Indication (TCI) signaling framework

Beam management (BM) in 5G NR has been employing a so-called Transmission Configuration Indication (TCI) signaling framework. The beam for a target channel/signal (e.g. PDSCH, PDCCH, CSI-RS) can be indicated by a TCI state. A TCI state contains parameters for configuring a quasi co-location (QCL) relationship between a source reference signal (RS) and the target channel/signal. By measuring the source RS, the UE can set the receive coefficients (e.g. spatial filter) for the reception of the target channel/signal. In Rel-17, a unified TCI framework has been introduced, allowing a TCI state commonly applied to multiple channels/signals. The same TCI state can be applied to both DL and UL transmissions (such as PUSCH, PUCCH, SRS), called a "*joint TCI state*"*.* In other words, a "joint TCI state" is a TCI state to be applied to /used for UL and DL transmissions.

Alternatively, UL and DL transmissions can have a separate "DL TCI state" and "*UL TCI state*", respectively. The UL TCI state is then applied to/used for UL transmissions of the UE, and the DL TCI state is applied to/used for DL transmissions of the UE. In general, there may be multiple UL and/or DL TCI states (e.g. one UL TCI state for PUCH transmissions, and one TCI state for PSUCH transmissions).

Further details of BM and the TCI signaling framework in 5G NR are described below.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into the following three main procedures:
- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). In one example, for determining the UE Tx beam, the UE is configured by the gNB to transmit SRSs (Sounding Reference Signals) in different directions to the gNB, and in turn the gNB determines and indicates to the UE the best/preferred UL beam using an SRI (SRS Resource Indicator).

Beam management procedure(s) can take place during the RACH (Random Access Channel) procedure, when the gNB sweeps beams by using different DL beams for each SSB, and the UE informs the gNB about the best/preferred Rx beam by using a specific PRACH resource mapped to the selected DL beam. The beam management procedure can e.g. be part or use the CSI framework. The CSI reporting can be configured by the network to occur periodically (e.g. RRC-configured), semi-persistently (e.g. triggered by MAC-CE and/or DCI) or aperiodically (e.g. triggered by DCI). For beam management, when part of the CSI framework, a UE may be configured using an information element, IE, *CSI-ReportConfig*, with the higher-layer parameter reportQuantity set to one or more of "cri-RSRP", "cri-SINR", "ssb-Index-RSRP", "ssb-Index-SINR", "cri-RSRP-Index", "ssb-Index-RSRP- Index", "cri-SINR-Index", "ssb-Index-SINR- Index".

### Initial beam establishment

Initial beam establishment includes the procedures and functions by which a beam pair is initially established in the downlink (DL) and uplink transmission (UL) directions, for example, when a connection is established. In the current 5G NR standard, this can be done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS of the PBCH.

A single SS block spans four OFDM symbols in time and 240 subcarriers in frequency (20 resource blocks). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then can report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring a received signal power. In idle mode, beam measurement can be based on the synchronization signals, and in connected mode, it can be based on the channel state information reference signal, CSI-RS, in DL and on the sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and the UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

### Beam failure recovery

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:
- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

### Beam measurement and reporting

General operations performed during one or more of said above main procedures may involve one or more of:
- *beam sweeping*, i.e., covering a spatial area with a set of beams transmitted and received according to pre-specified intervals and directions,
- *beam measurement*, i.e., the evaluation of the quality of the received (beam) signal at the gNB or at the UE,
- *beam determination*, i.e., the selection of the suitable beam or beams either at the gNB or at the UE, according to measurements obtained with the beam measurement procedure, and
- *beam reporting*, i.e., a procedure used by the UE to send beam quality and beam decision information to the gNB.

In brief, beam measurement and reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework (see below section).

### Channel State Information measurement and reporting framework

The network may configure a UE to perform measurements and to report the measurement results in accordance with the configuration parameters. The measurement and reporting done by a UE can be for instance based on the CSI reporting framework of 5G NR, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resources are defined by the lEs *CSI-IM-Resource*, and *SSB-Index.*
2) List of *CSI-ResourceConfig* lEs
   - Different *CSI-ResourceConfig* in the list can contain one or more different RS resource sets, chosen from List element 1). This may include *NZP-CSI-RS-ResourceSet*, *CSI-IM-ResourceSet*, and/or *CSI-SSB-ResourceSet*, respectively identified by suitable IDs (see e.g. *NZP-CSI-RS-ResourceSetId*, *CSI-IM-ResourceSetId*, and/or *CSI-SSB-ResourceSetId*)
3) List of CSI-ReportConfig lEs.
   - Different *CSI-ReportConfig* in the list configure different CSI report instances. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID*, being included in the *CSI-ReportConfig* IE, identifies a *CSI-ResourceConfig* IE to be used.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v18.1.0, in section 6.3.

There are at least two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus inflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information),
- PMI (Precoding Matrix Indicator),
- CRI (CSI-RS Resource Indicator),
- SSBRI (SS/PBCH Resource Block Indicator),
- LI (Layer Indicator),
- RI (Rank Indicator),
- L1-RSRP, and/or
- Capability Index.

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config*)
- CSI-related quantities (e.g. the rest from the IE *CSI-ReportConfig*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In brief, the measurement and reporting for the LTM can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible and exemplary sequence of lEs for defining measurement and report according to the CSI framework is presented in the following:
- *CellGroupConfig* IE
   ∘ the *ServingCellConfig* IE of *SpCellConfig* or of *SCellConfig*
      ▪ *CSI-MeasConfig* IE
         - *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
         - *CSI-ReportConfig* IE

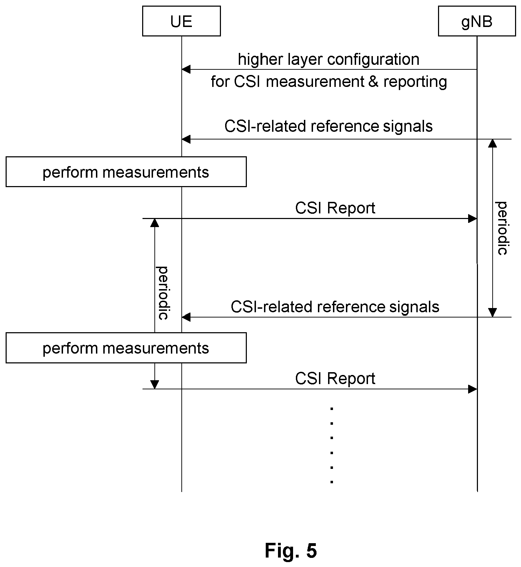

**Fig. 5** illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Transmission Configuration Indicator (TCI) states

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters which two signals might share, including for instance one or more of:
- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field "*Transmission Configuration Indication*"*.*
- Step 3: One out of the 8 activated TCI states is then actually used by the UE to receive a target channel/signal. For example, the UE receives a DCI signal, which indicates one of the codepoints in the DCI field "*Transmission Configuration Indication*"*.* The UE applies the indicated codepoint to the target channel(s) or target signal(s).

### Configuration of TCI states (TCI Configuration)

According to one exemplary implementation (see e.g. 3GPP TS 38.214, v18.1.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v18.0.0, section 6.3.2, associates one or two DL reference signals (here SSB and/or CSI-RS) with a corresponding quasi-colocation (QCL) type (for DL or joint DUUL operation) as follows:

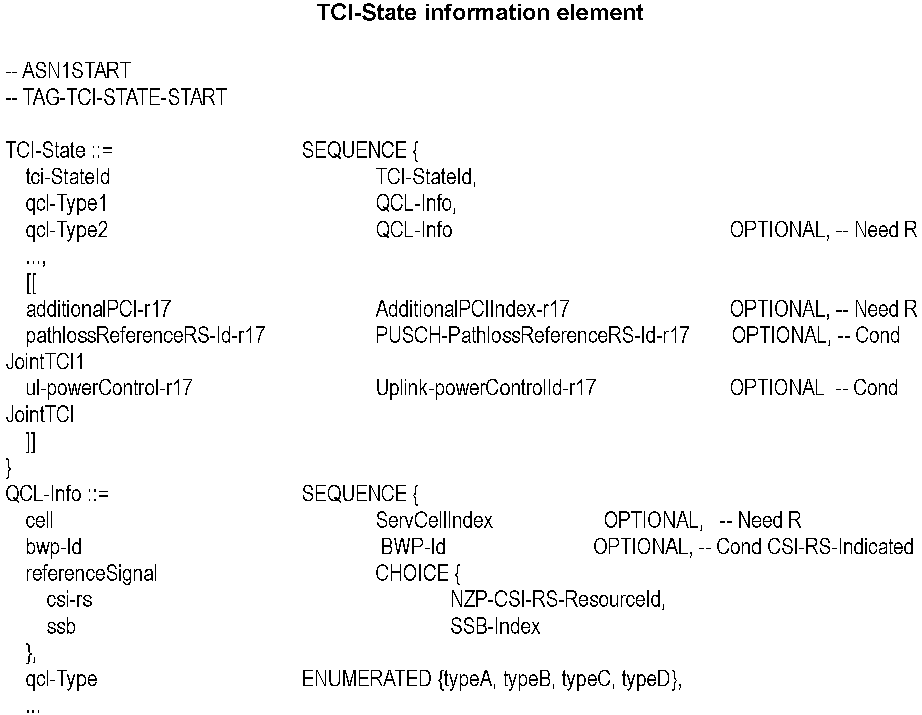

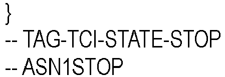

| ***QCL-Info* field descriptions** |
|---|
| ***bwp-Id*** |
| The DL BWP which the RS is located in. If the field is absent, the RS is located in the DL BWP in which the *TCI-State* is applied by the UE. |
| ***cell*** |
| The UE's serving cell in which the *reference Signal* is configured. If the field is absent, the *reference Signal* is configured in the serving cell in which the *TCI-State* is applied by the UE. The RS can be located on a serving cell other than the serving cell for which the *TCI-State* is applied by the UE only if the *qcl-Type* is configured as *typeC* or *typeD.* If the *referenceSignal* is set to *csi-rs* and *unifiedTCI-StateType* is configured, either both *cell* and *bwp-Id* are present or both *cell* and *bwp-Id* are absent. See TS 38.214 [19] clause 5.1.5. |
| ***referenceSignal*** |
| Reference signal with which quasi-collocation information is provided as specified in TS 38.214 [19] clause 5.1.5. |
| ***qcl-Type*** |
| QCL type as specified in TS 38.214 [19] clause 5.1.5. |

| ***TCI-State* field descriptions** |
|---|
| ***additionalPCI*** |
| Indicates the physical cell IDs (PCI) of the SSBs when *referenceSignal* is configured as SSB for both QCL-Type1 and QCL-Type2. In case the *cell* is present, the *additionalPCI* refers to a PCI value configured in the list configured using *additionalPCI-ToAddModList* in the serving cell indicated by the field cell. Otherwise, it refers to a PCI value configured in a list *additionalPCI-ToAddModList* configured in the serving cell where the *TCI-State* is applied by the UE. When this field is present the *cell* for *qcl-Type1* and *qcl-Type2* is configured with same value, if present. |
| ***pathlossReferenceRS-Id*** |
| The ID of the reference signal (e.g. a CSI-RS or an SS block) used for PUSCH, PUCCH and SRS path loss estimation. This field refers to an element in the list configured using *pathlossReferenceRSToAddModList* in the serving cell and UL BWP where the TCI State is applied by the UE. |
| ***qcl-Type1*, *qcl-Type2*** |
| QCL information for the TCI state as specified in TS 38.214 [19] clause 5.1.5. |
| ***tci-Stateld*** |
| ID number of the TCI state. |
| ***ul-PowerControl*** |
| Configures power control parameters for PUCCH, PUSCH and SRS for this TCI state. The field is present here only if *ul-powerControl* is not configured in any *BWP-Uplink-Dedicated* of this serving |
| cell. This field refers to an element in the list configured using *uplink-PowerControlToAddModList* in the serving cell where the *dl-OrJointTCI-StateToAddModList* is configured. |

| **Conditional Presence** | **Explanation** |
|---|---|
| *CSI-RS-Indicated* | This field is mandatory present if *csi-rs* is included and *unifiedTCI-StateType* is not configured. This field is optionally present, Need R, if *csi-rs* is included and *unifiedTCI-StateType* is configured. Otherwise, it is absent, Need R. |
| *JointTCI* | This field is optionally present, Need R, if this serving cell is configured with *unifiedTCI-StateType* set to '*joint.*' It is absent, Need R, otherwise. |
| *JointTCI1* | This field is mandatory present, if this serving cell is configured with unifiedTCi-StateType set to 'joint'. It is absent, Need R, otherwise. |

For the uplink, the information element *TCI-UL-State* is defined in 3GPP TS 38.331, section 6.3.2.

### Further Improvements

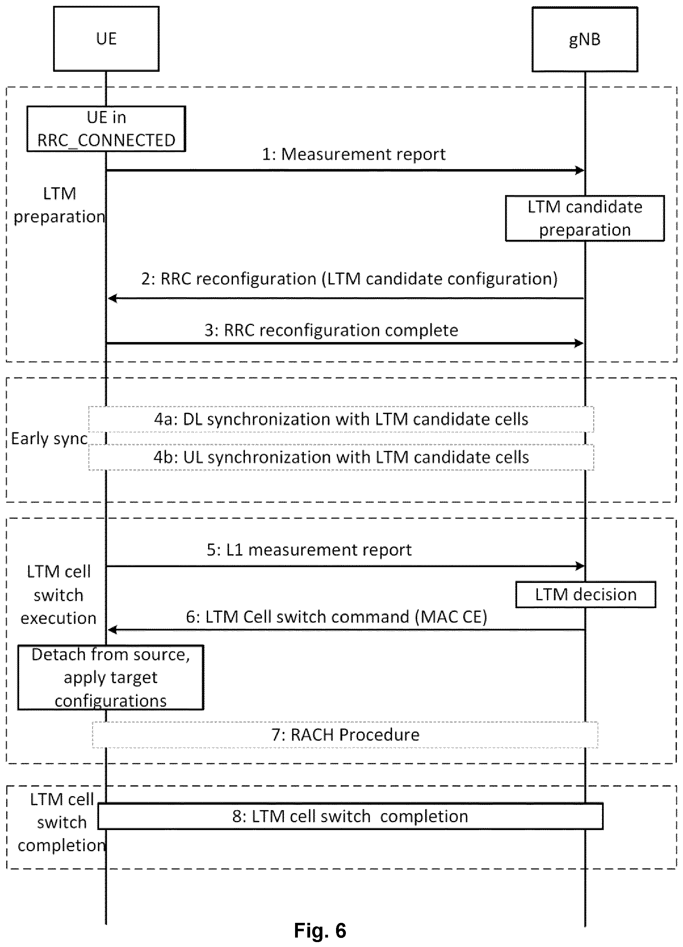

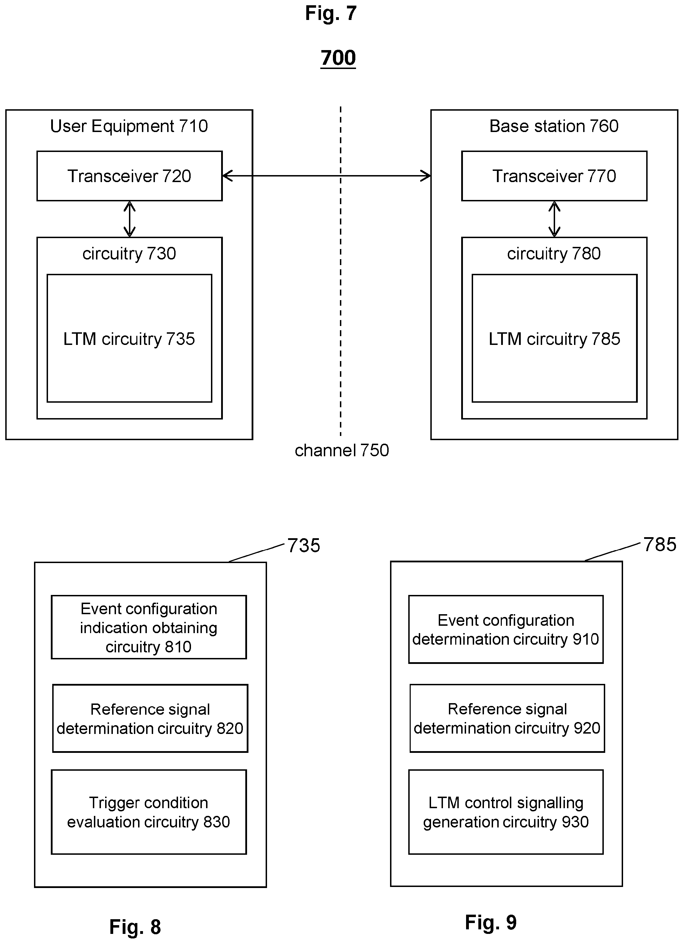

As already mentioned above, Release 18 has introduced lower layer mobility, also referred to as L1L2 triggered mobility (LTM). Some aspects thereof have already been described above in particular with reference to Figs. 3 to 4. Further details of the signaling procedure for LTM can be found in 38.300_CR0833 (R2-2401610) and are illustrated in **Fig. 6** (corresponding to Figure 9.2.3.5.2-1 of 38.300_CR0833 (R2-2401610)).

In particular, in step 6, gNB decides to execute a cell switch to a target cell and transmits an LTM cell switch command MAC CE triggering the cell switch. This LTM cell switch command may include:
- a target configuration ID which indicates the index of the candidate configuration index of the target cell,
- a beam indicated with a TCI state or beams indicated with DL and UL TCI states, and
- a timing advance command for the target cell, if available.

The UE switches to the target cell and applies the candidate configuration indicated by candidate the target configuration index ID. In step 7, UE may perform a RA procedure towards/in the target cell, if UE does not have valid TA of the target cell.

The UE may in particular not have valid TA of the target cell if the early synchronization in the optional step 4b in Fig. 6 is not performed. Thus, the RA procedure is usually performed if no early synchronization with the target cell is performed (and vice versa).

The beam and/or TCI state, indicated in the cell switch command is intended for UE to use for transmissions and/or receptions on the target cell.

As already mentioned above, Layer 1/Layer 2 Triggered Mobility (LTM) can offer improvements in handover latency and interruption time compared to Layer 3 based mobility (i.e. handover triggered by RRC signaling). As illustrated in **Fig. 6** (and already briefly discussed above), the UE is configured in step 2 with an LTM candidate configuration. The LTM candidate configuration may include an indication of one or more candidate cells, which in the present disclosure are also referred as "*LTM candidate cells*"*.* LTM candidate cells are possible targets for an LTM cell switch of the UE, wherein one of the LTM candidate cells becomes the new serving cell of the UE (and a current serving cell loses the status of being a serving cell). One of these candidate cells is then (in case of an LTM cell switch) indicated, by the base station (BS) to the UE, in the LTM cell switch command that is transmitted in step 6. In general, the BS may decides whether the UE is to perform a cell switch and/or to which of the candidate cells the cell switch is to be performed based on measurement report, received by the BS from the UE. These measurement reports are the L1 measurement reports transmitted in step 5 of Fig. 6.

However, LTM as introduced in Rel-18 has a number of limitations compared to Layer 3 based mobility. For instance, L3 mobility uses L3 measurement reporting, which supports UE evaluated events for triggering of measurement reports and reduces signalling overhead compared to periodic measurement reporting. Such event triggering is not supported by the L1 measurement and reporting framework that are used for Rel-18 LTM. More specifically, the existing (as of Rel-18) L1 measurement and reporting framework is based on the signalling design show below:

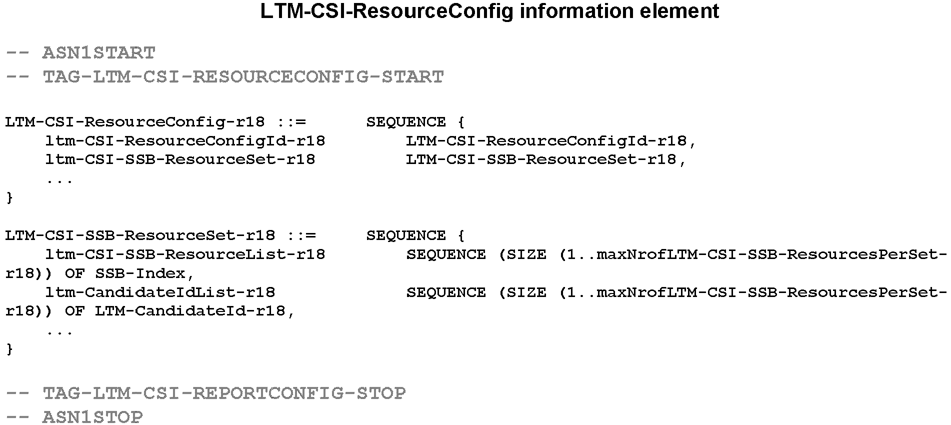

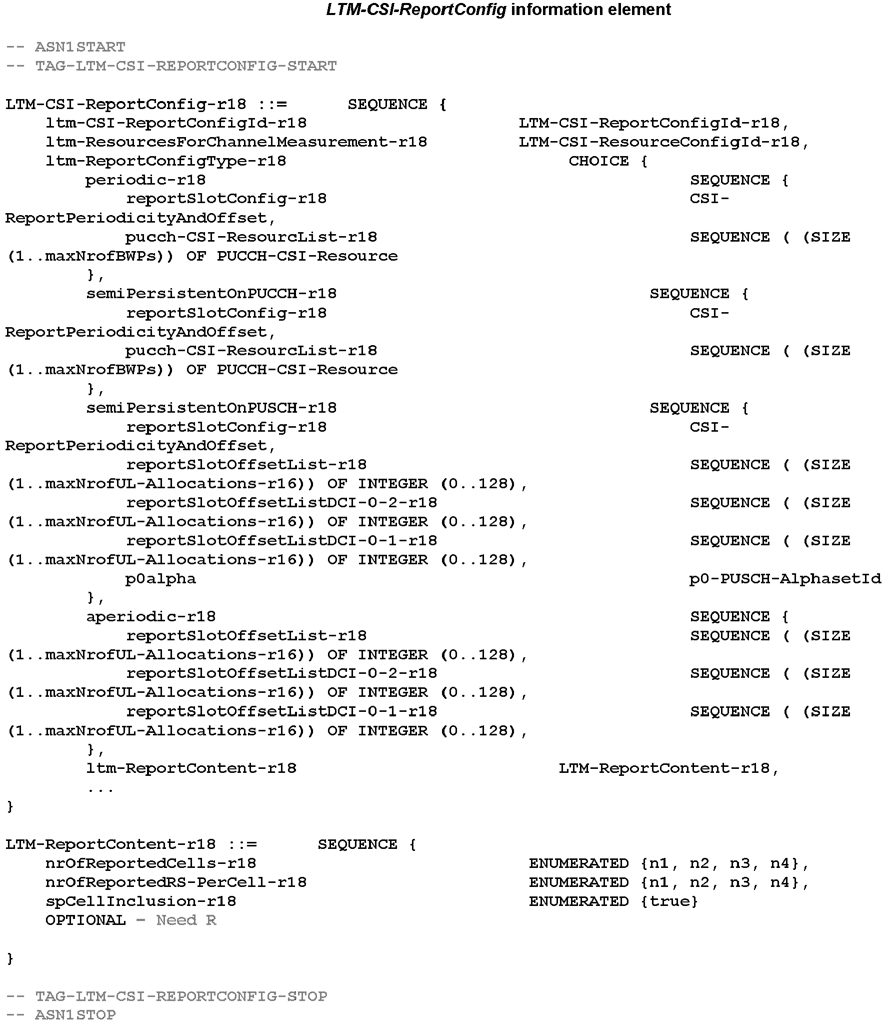

As can be seen, the existing signalling design comprises a measurement resource configuration and reporting configuration information element. The measurement resources for all candidate cells are configured by *LTM-CSI-ResourceConfig.* Only SSB can be configured. Multiple configurations can be configured which can provide different sets of resources (e.g. from a different subset of candidate cells). Each configuration is identified by *LTM-CSI-ResourceConfigld-r18.* The reporting is configured by *LTM-CSI-ReportConfig.* One report configuration is linked to one resource configuration by using *LTM-CSI-ResourceConfigld-r18.* Periodic, semi-persistent and aperiodic reporting can be configured (all are network scheduled/triggered). Serving cell may or may not be configured as a candidate cell (up to gNB's choice). In case serving cell is a candidate cell, the parameter *spCellInclusion-r18* to indicate UE to include the measurement result of serving cell in the LTM measurement report; without presence of *spCellInclusion-r18,* UE excludes the serving cell from the LTM measurement report. In case the serving cell is not a candidate cell, serving cell measurement result cannot be included in the LTM measurement report. In either case, gNB can obtain serving cell measurement result from the intra-cell beam management measurement (i.e. not relying on LTM measurement). The intra-cell beam management measurement and reporting has been described in above section "*Channel State Information measurement and reporting framework*"*.*

In Rel-19 the following LTM events based on beam specific quality of serving cell and candidate cells as the L1 LTM measurement events may be supported:
- Event LTM2: Beam of serving cell becomes worse than absolute threshold;
- Event LTM3: Beam of candidate cell becomes amount of offset better than beam of serving cell;
- Event LTM4: Beam of candidate cell becomes better than absolute threshold;
- Event LTM5: Beam of serving cell becomes worse than absolute threshold1 AND Beam of candidate cell becomes better than another absolute threshold2.

These trigger condition may be referred to in the examples given below. It is not yet decided whether a further Event "LTM1" will be implemented. For event triggered L1 measurement, use of beam level measurement result for event evaluation may be baseline. However, cell level measurement may also be implemented (e.g. by consolidating measurements from multiple beams of a candidate cell).

### Embodiments

The inventors have identified the above-discussed potential challenges and issues associated with the introduction of event triggered L1 measurement reporting. In particular, it is currently unclear how to define and/or configure the reference signals (RS(s)) for event triggered L1 measurement reporting for LTM, based on which the UE is to evaluate a given LTM event. In particular, the necessary components to support event triggered L1 measurement reporting still have to be specified. Furthermore, it is to be determined on what beam(s) of the serving cell and neighboring cell are used for event evaluation. Furthermore, it may be advantageous if both SSB based beam and CSI-RS based beam are supported by the signalling framework. In this case, a signalling framework that ensures that the same reference signal type (e.g. SSB vs. CSI-RS) is used for both serving and candidate cells for e.g. event evaluation such as LTM events 3 and 5 may be particularly efficient (as signals of the same type are better comparable). Thus, new enhanced signaling may be needed for Rel-19 with minimum impact on legacy NR deployment.

The inventors have thus identified the possibility of providing improved procedures that allows avoiding or mitigating one or more of the above-identified problems. The present invention relates to different solutions and variants for such an improve procedure. In particular, the present disclosure provides techniques for providing and indicating, in an efficient and/or flexible manner, a communication device with the appropriate reference signals based on which a given LTM trigger event is to be evaluated. In particular, usage of other types of reference signals other than SSB, such as CSI-RS may be enabled. Some of the disclosed signalling frameworks may also increase the efficiency of resource usage (e.g. by reducing the amount of overhead). In particular, it is thus clear to the UE what beam(s) of the serving cell and what beam(s) of the candidate cell(s) are to be used for event evaluation. The disclosed signalling frameworks also allow ensuring that the serving cell RS and the candidate cell RS have the same RS type.

As already mentioned above, the present disclosure provides scheduling devices (or e.g. base stations), corresponding methods for scheduling devices, communication devices (or e.g. UEs), and corresponding methods for communication devices. The present disclosure further provides integrated circuits, which, in operation, control a processes of a base station/communication device to perform the respective method as well as corresponding (e.g. computer) programs. The present disclosure further provides a system including a scheduled and scheduling device, as well as a corresponding methods for systems. An example of such communication system is illustrated in **Fig. 7**. The communication system 700 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 7** illustrates a general, simplified and exemplary block diagram of a communication device 710 (here exemplarily assumed to be a UE) and a scheduling device 760 (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 710 may also be a sensor device, a wearable device, or a connected vehicle, or a controller of an automated machine in an industrial factory. Further, a communication device 710 may be able to function as a relay between a base station and another communication device (e.g. the disclosure is not limited to communication "terminals" or user "terminals").

As illustrated in **Fig. 7**, the communication device 710 and the base station 760 (eNB/gNB) may communicate with each other over a (wireless) physical channel 750 respectively using their transceivers 720 (UE side) and 770 (base station side). Together, the base station 760 and the terminal 710 form the communication system 700. The communication system 700 may further include other entities such as those shown in Fig. 1.

As illustrated in **Fig. 7** (left-hand side), a communication device may comprise a transceiver 720 and circuitry 730 (or processing circuitry 730), and a scheduling device may comprise a transceiver 770 and a (processing) circuitry 780.

### Transceiver

The ***transceiver*** in turn may comprise and/or function as a receiver and/or a transmitter. In this disclosure, in other words, the term "*transceiver*" is used for hardware and software components that allow the communication device, or, respectively base station to transmit and/or receive radio signals over a wireless channel. Accordingly, a transceiver corresponds to a receiver, a transmitter, or a combination of receiver and transmitter. A transmitter may be responsible for performing the process of transmitting and other processes related thereto. A receiver may be responsible for performing the process of receiving and other processes related thereto, such as monitoring a channel.

Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

### Circuitry

A ***circuitry*** or ***processing circuitry*** may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

### Communication Device (e.g., a UE) & corresponding method

According to an exemplary embodiment, a communication device 710 as e.g. illustrated in **Fig. 7** (left-hand side) is provided. The communication device 710 comprises a transceiver 720 and circuitry 730. The transceiver 720, in operation, (i) receives LTM control signalling. The (processing) circuitry 730, in operation, obtains, from the LTM control signalling, an LTM trigger event configuration indication. As already mentioned above and also further explained below, the LTM trigger event specifies/corresponds to a condition, which is in the present disclosure is also referred to as "*trigger condition*"*.* Furthermore, circuitry 730 determines the reference signal(s) involved in the trigger event (in the present disclosure referred to as "*involved RS(s)*"*.* Circuitry 730 further determines, by evaluating whether the involved RS(s) satisfy the trigger condition, whether to transmit an L1 measurement report (for this event/for the involved RS(s)). The transceiver 720 then transmits, if it is determined that the L1 measurement report is to be transmitted, the L1 measurement report.

It is noted that, unless context indicates otherwise, the wording "*in operation*" and "*configured to*"*,* "*adapted to*" and the like are used interchangeably in the present disclosure.

For instance, the communication device 710 may obtain the LTM trigger event configuration indication from the LTM control signalling by parsing the LTM control signalling and/or by extracting, from the LTM control signalling, particular indications (such as the RS type indication, the serving cell RS configuration indication, and/or the candidate cell RS configuration indication, which are further explained below) and/or information elements (such as the LTM-CSI-ReportConfig-r18/r-19 information element and/or the Ltm-EventTriggerConfig-r19, which are also further explained below).

It is noted that circuitry 730 may implement more than the above-mentioned functionality. For instance, circuitry 730 may further control the transceiver 720 to receive the LTM control signalling and/or to receive or transmit other data/control information/signals. In particular, circuitry 730 may control the transceiver to perform any other transmission/reception disclosed herein, such as the receptions of one or more of the involved RS(s). Thus, the circuitry 730 is exemplarily considered to include LTM circuitry 735, which is configured to perform the above-mentioned obtaining of LTM trigger event configuration indication, determining of the involved RS(s), and evaluation of the trigger condition.

**Fig. 8** shows an exemplary functional structure of the LTM circuitry 735. In particular, the LTM circuitry 735 may include
- event configuration indication obtaining circuitry 810, which may perform the obtaining of the LTM trigger event configuration from the LTM control signalling;
- reference signal determination circuitry 820, which may perform the determining of the involved RS(s); and
- trigger condition evaluation circuitry 830, which may perform the evaluation of the trigger condition.

The configuration of circuitry 730/735 may be provided by hardware adaption and/or by software. It is noted that the LTM circuitry 735 may also implement more functionality (in particular, functionality shown in Fig. 6). For instance, LTM circuitry 735 may also be responsible for generating an L1 measurement report (cf. step 5 in Fig. 6), for performing the LTM cell switch in response to the reception of an LTM cell switch command (cf. step 6 in Fig. 6) and the like.

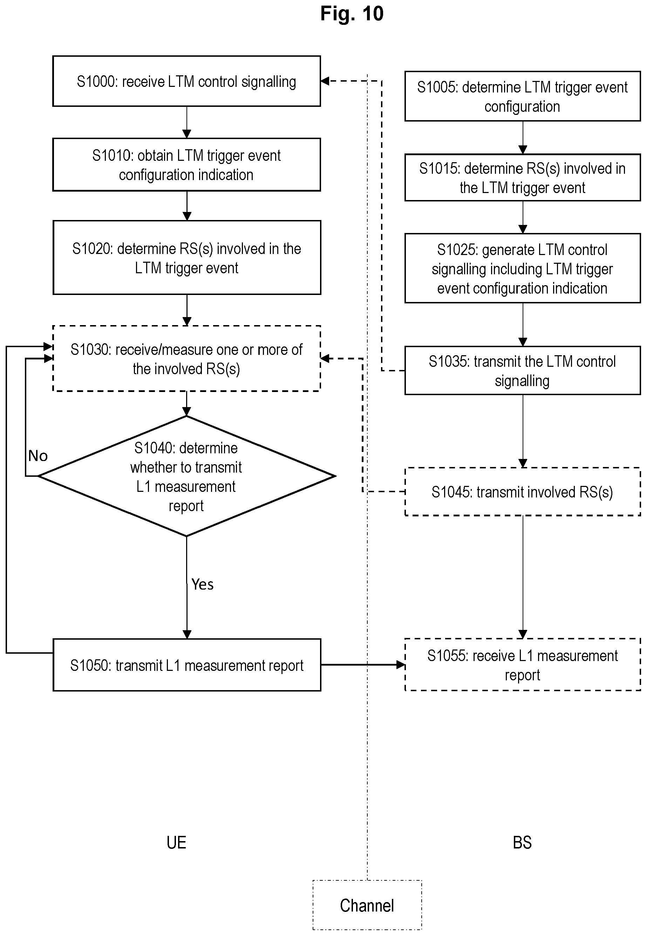

In correspondence with the above described communication device, a method to be performed by a communication device is provided. As shown in **Fig. 10**, the method comprises a step of:
- receiving S1000 LTM control signalling;
- obtaining S1010, from the LTM control signalling, an LTM trigger event configuration indication;
- determining S1020 the reference signal(s) involved in the trigger event (i.e. the RS(s) involved in the LTM trigger event of which the obtained S1010 LTM trigger event configuration indication indicates the configuration);
- determining S1040, by evaluating whether the involved RS(s) satisfy the trigger condition, whether to transmit the L1 measurement report; (as indicated in Fig. 10, this step may be performed periodically; for instance, this step may be performed after each measurement of one of the involved RS); and
- transmitting S1050, if it is determined that the L1 measurement report is to be transmitted, the L1 measurement report.

Furthermore, the method comprises a step of receiving S1030 and/or measuring S1030 one more of the involved RS.

### Base station (BS) & corresponding method

As also shown in **Fig. 7** (right-hand side), according to another exemplary embodiment, a scheduling device 760 is provided. The scheduling device 760 comprises a transceiver 770 and circuitry 780. The (processing) circuitry 780, in operation, determines, for a communication device for which the scheduling device operates (e.g. currently, when performing this determining) the serving cell, the configuration of an LTM trigger event (this configuration is, in the present disclosure, also referred to as "*LTM trigger event configuration*")*.* Circuitry 780 further determines the involved RS(s), and generates LTM control signalling including an LTM trigger event configuration indication that indicates the determined LTM trigger event configuration. The transceiver 770, in operation, transmits the LTM control signalling.

Circuitry 780 may implement more than the above-mentioned functionality. For instance, circuitry 780 may further control the transceiver 770 to transmit the LTM control signalling and/or to receive or transmit data/other signals. In particular, circuitry 780 may control the transceiver to perform any other transmission/reception disclosed herein, such as the transmission of one or more of the involved RS(s). Thus, the circuitry 780 is exemplarily considered to include LTM circuitry 785, which is configured to perform the above-mentioned determining of the LTM trigger event configuration, the determining of the involved RS, and the generation of the LTM control signalling.

An exemplary functional structure of LTM circuitry 785 is shown in **Fig. 9**. In particular, LTM circuitry 785 may include:
- Event configuration determination circuitry 910, which may perform the determination of the LTM trigger event configuration (that is to be indicated (possibly partially) by the LTM trigger event configuration indication included in the LTM control signalling);
- Reference signal determination circuitry 920, which may perform the determination of the involved RS; and
- LTM control signalling generation circuitry 930, which may perform the generation of the LTM control signalling.

The configuration of circuitry 780/785 may be provided by hardware adaption and/or by software. It is noted that the LTM circuitry 785 may also implement more functionality (in particular, functionality shown in Fig. 6). For instance, LTM circuitry 785 may also be responsible for deciding, based on L1 measurement reports received from the communication device, whether the communication device is to perform a cell switch away from the serving cell to one of the candidate cells, and/or for generating an LTM cell switch command (cf. step 6 in Fig. 6). In other words, the scheduling device may operate the source cell of the potential cell switch of the communication device. That is the (current) serving cell of the communication device is the source cell of the (next) cell switch.

Furthermore, in correspondence with the above described scheduling device, a method to be performed by a scheduling device, operating a serving cell of a communication device, is provided. As shown in **Fig. 10**, the method comprises a step of:
- Determining S1005, for the communication device, an LTM trigger event configuration;
- Determining S1015 the reference signal(s) involved in the trigger event (i.e. the RS(s) involved in the LTM trigger event of which the configuration has been/is/will be determined in S1005);
- generating 1025 LTM control signalling that includes an LTM trigger event configuration indication that indicates the LTM trigger event configuration (that was determined in step S1015); and
- transmitting S1035 the LTM control signalling.

As further shown in **Fig. 10**, the method for the scheduling device may also include a step of transmitting S1045 one or more of the involved RS(s) and/or a step of receiving S1055 an L1 measurement, transmitted by the communication device.

It is further noted that the scheduling device (BS) may perform steps S1005 and S1015 jointly, or may perform S1015 before step S1005. In particular, the determination in S1005 may be based on the result of the step S1015, or vice versa. These steps may further be based on the reference signals with which the UE is (currently) configured (in particular since the involved RS(s) are RS among the configured RS), the current serving sell TCI state, and/or the (configured) candidate cell TCI state. One of the steps may also be considered to be included in the other (i.e. S1005 may be part of S1015 or vice versa).

It is noted that the present disclosure relates to two entities, a UE (typically communication device/transceiver device) and a base station (typically a network node). Accordingly, in the further description, the details and embodiments apply to (and may be implemented by them) each of the communication device, the base station (or scheduling node), and the corresponding methods/circuits unless explicit statement or context indicates otherwise.

In particular, the base station may be configured to generate and transmit the control signals as described below and the communication device/UE may be configured to receive such signalling and obtain the respective indications therefrom. In particular, any of the steps/operations described below may be performed or controlled by the circuitry 730 (on the UE side) and/or the circuitry 780 (on the base station side). Furthermore, any reception and transmission steps may be performed by the transceiver 720 (on the UE side) and/or the transceiver 770 (on the base station side) (e.g. by being controlled by the respective circuitry to do so).

Furthermore, both the base station side and the UE side may/should determine the same involved reference signals and LTM trigger event configuration. However, the UE determines/obtains (in particular steps S1010 and S1020) the involved reference signals based on control signalling received from the BS, such as LTM control signalling, the current TCI states, and/or references signals configured by the BS. The UE thus performs its determination based on an obtained signallings/indications, which are the result of a decision made by another entity (e.g. the BS). The UE thus makes no decision in this determination, but derives/obtains the result of the decisions already done e.g. by the source/serving cell BS.

The BS, on the other hand, makes (i) in step S1005 usually an (actual) decision about the configuration of the trigger event, and (ii) in S1015 may make a decision which of the configured RS(s) of the communication device are to be involved in the trigger event. It is noted that, in the determination of the involved RS(s) in step S1015, the BS may also have no actual choice (e.g. when the involved serving cell RS is to be determined based on the indicated TCI state which is dynamically decided later. This will be further explained below.).

### LTM trigger event configuration indication & LTM trigger event configuration

In general, the Layer 1/Layer 2 Triggered Mobility (LTM) control signalling includes an LTM trigger event configuration indication. It is noted that the LTM control signalling may be a control signalling including an LTM-CSI_ReportConfig information element, as described below. The LTM control signalling may thus e.g. include the below-described "LTM-CSI-ReportConfig-r18" or "LTM-CSI-ReportConfig-r19" information/syntax element. However, the present disclosure is not limited thereto.

The ***LTM trigger event configuration indication*** indicates the configuration of the LTM trigger event (in the present disclosure referred to as "LTM trigger event configuration"). In general, the LTM trigger event configuration indication does not, own its own/in isolation, indicate the complete configuration of the LTM trigger event and/or the involved RS(s). For instance, the involved RS(s), may be determined also based on the configured RS(s) and the current TCI state of the UE. It is noted that the LTM trigger event configuration indication is not necessarily obtained just from one particular information or syntax element in the control signalling.

The LTM trigger event configuration indication is generated and/or included in the LTM control signalling by the BS in S1015. The BS generates LTM trigger event configuration indication based on e.g. (i) the LTM trigger event configuration determined in S1005 and/or (ii) the involved RS(s) determined in S1015. In other words, the BS generates the LTM trigger event configuration indication such that the UE can determine the LTM trigger event configuration and/or the involved RS(s) based on the LTM trigger event configuration indication, the current TCI state, and/or the configured RS(s) from which the involved serving/candidate cell RS is selected.

It is noted that, in the present disclosure, the term "*current serving cell TCI state*" or ""*current TCI state*" refers to "a" or to "*the*" TCI state that is currently used by the communication device in the serving cell.

In other words, in the present disclosure, the term "*LTM trigger event configuration indication*" refers to one or more (or e.g. all) indications that (i) are related to the configuration of the LTM trigger event, and (ii) can obtain from (or included in) the LTM control signalling.

In particular, the LTM trigger event configuration indication may include (e.g. for determining the involved RS(s)):
- a ***serving cell RS indication*** (that e.g. indicates/gives an indication which among the configured serving cell RS(s) the involved serving cell RS(s) is/are), and/or
- a ***candidate cell RS indication*** (that e.g. indicates/gives an indication which among the configured candidate cell RS(s) the involved candidate cell RS(s) is/are.

In general, the serving cell RS indication will/may (only) be included if the LTM trigger event involves a serving cell RS and the candidate cell RS indication will/may (only) be included if the LTM trigger event involves a candidate cell RS.

Furthermore, the LTM trigger event configuration indication may indicate/specify the trigger event. In particular, the LTM trigger event configuration indication may indicate/specify the trigger condition of the trigger event (e.g. by indicating an ID of the trigger event). For instance, the trigger event configuration indication may indicate (or include an indication indicating) one of the above-mentioned evets "Event LTM2" to "Event LTM5" (possibly also including "Event LTM1").

As another example, the LTM trigger event configuration indication may indicate whether the trigger event involves the serving cell RS and/or the LTM trigger event configuration indication may indicate whether the trigger event involves the candidate cell RS. It is noted that these indication(s) may be part of the indication of the trigger condition and/or the trigger event ID. For instance, the indication of Event LTM3", is also an indication of the trigger condition (i.e. "Beam of candidate cell becomes amount of offset better than beam of serving cell"), and is also an indication that the trigger event involves the serving cell RS and a candidate cell RS.

### Serving cell RS indication & Candidate cell RS indication

In general, (i) the serving cell RS indication may include a ***RS type indication***; (ii) and/or the candidate cell RS indication includes a RS type indication. Furthermore, in general, (i) the candidate cell RS indication can be considered to include the serving cell RS indication; (ii) the serving cell RS indication can be considered to include the serving cell RS indication; and/or (iii) the serving cell RS indication and the candidate cell RS indication may be the same indication. In particular, there is usually one RS type indication that applies to both the candidate and the serving cell RS (if both are involved in the trigger event). In other words, the RS type indication included in the serving cell RS indication and the RS type indication included in the candidate cell RS indication may be the same RS type indication (indicating the same RS type for both RSs). The RS type thus indicates one RS type that each of the involved RS(s) has.

The term *"**RS type**"* refers to a specific type of reference signal. The RS types may include but are not limited to CSI-RS and SSB. Other examples could be TRS (see, e.g. IE *TRS-ResourceSet* in TS 38.331), or CSI-RS for mobility (see, e.g. IE *CSI-RS-ResourceConfigMobility* in TS 38.331). In practice, the RS type may be associated with/correspond to a particular beam width and/or directionality. In other words, an RS that has the "CSI-RS" type could be transmitted using a different beam shape than an RS that has "SSB" type. Usually, an SSB beam (beam carrying SSB) is wider than an CSI-RS beam (beam carrying CSI-RS). However, it is up to base station's implementation to form the beam shape. It can be implemented in a way that two reference signals are transmitted using the same beam. Nevertheless, by measuring the reference signal carried by the beam, UE can derive the spatial domain property of the reference signal transmitted, among other time/frequency domain properties related to pathloss or fading.

In general, the candidate cell RS indication may include a ***candidate cell RS configuration indication**.* The candidate cell RS configuration indication indicates a candidate cell RS configuration with which the communication device is configured. In other words, the communication device is/has already been configured with the candidate cell RS configuration when the control signaling, including the LTM event configuration indication, is received by the communication device. The candidate cell RS configuration indication thus may indicate (or be) e.g. an identifier (ID) of a configured candidate cell RS configuration.

The ***candidate cell RS configuration*** may indicate/specify/correspond to:
- for each of two or more RS types of configured candidate cell RS, respective time-frequency resources (In other words, the candidate cell RS configuration indicates, for each of two or more configured candidate cell RS, respective time-frequency resources, wherein the two or more configured candidate cell RS have mutually different RS types. In particular, it is noted that this does not exclude that two or more configured candidate cell RS, for which the candidate cell RS configuration indicates respective time-frequency resources, have the same type. In other words, it does not exclude that the candidate cell RS configuration indicates respective time-frequency resources for two or more candidate cell RS that have the same type. It just means that, among the candidate cell RS of which the candidate cell RS configuration indicates time-frequency resources, there are at least two candidate cell RS that have a mutually different RS type. However, in some cases, all the candidate cell RS, of which the candidate cell RS configuration indicates time-frequency resources, may have mutually different RS types), or
- resources (e.g. time-frequency resources) of just one (or only) single RS type of configured candidate cell RS(s) (In other words, the candidate cell RS configuration may indicate time-frequency resources for one or more configured candidate cell RS(s) (here the "*one or more configured candidate cell RS(s)*" are all of the configured candidate cell RS of which this candidate cell RS configuration indicates time-frequency resources), wherein each of these one or more configured candidate cell RS(s) has the same RS type. Put differently, each (or every or any or all) configured candidate cell RS of which this candidate cell RS configuration indicates time-frequency resources has the same RS type (the same RS type as all other configured candidate cell RS of which this candidate cell RS configuration indicates time-frequency resources). Thus, the candidate cell RS configuration indicates time-frequency resources only of configured candidate cell RS(s) of one RS type (and indicates no time-frequency resources of configured candidate cell RS(s) that have a different RS type than said one RS type). It is further noted that this includes the case that the candidate cell RS configuration resources of just (or only) one single candidate cell RS).

If the candidate cell RS configuration indicates for each of two or more types of configured candidate cell RS, respective time-frequency resources, the involved candidate RS(s) is/are the RS(s), among the configured candidate cell RS, for which the candidate cell RS configuration indicates respective time-frequency resources, that has/have the "*correct*" RS type. In particular, if there are multiple involved candidate RS(s) of the "correct" RS type (i) one of those may be determined to be the involved candidate cell RS, or (ii) more than one (e.g. all) may be determined to be involved candidate cell RS (in this case, the trigger condition may be evaluated for each involved candidate cell RSs separately). The "*correct*" RS type may be indicated by an RS type indication in the LTM event configuration indication, or may be given by the current TCI state of the serving cell. Merely for ease of description and clarity, it is often assumed that (i) there is only configured candidate cell RS of the "correct" type, and (ii) only one involved candidate cell RS determined.

More specifically, the involved candidate cell RS may be that RS of the two or more types of configured candidate cell RS(s) of the indicated candidate cell RS configuration that has (as further explained below)
- the same RS type as the QCL RS that is associated with the current serving cell TCI state, or
- is of the type indicated by an RS type indication.

In general, the serving cell RS indication may include a ***serving cell RS configuration indication**.* The serving cell RS configuration indication indicates a serving cell RS configuration with which the communication device is configured. In other words, the communication device is/has already been configured with the serving cell RS configuration when the control signaling, including the LTM event configuration indication, is received by the communication device. The serving cell RS configuration indication thus may indicate e.g. an identifier (ID) of a configured serving cell RS configuration.

The ***serving cell RS configuration*** may indicate/specify/correspond to:
- for each of two or more RS types of configured serving cell RS, respective time-frequency resources (In other words, the serving cell RS configuration indicates, for each of two or more configured serving cell RS, respective time-frequency resources, wherein the two or more configured serving cell RS have mutually different RS types. In particular, it is noted that this does not exclude that two or more configured serving cell RS, for which the serving cell RS configuration indicates respective time-frequency resources, have the same type. In other words, it does not exclude that the serving cell RS configuration indicates respective time-frequency resources for two or more serving cell RS that have the same type. It just means that, among the serving cell RS of which the serving cell RS configuration indicates time-frequency resources, there are at least two serving cell RS that have a mutually different RS type. However, in some cases, all the serving cell RS, of which the serving cell RS configuration indicates time-frequency resources, may have mutually different RS types), or
- resources (e.g. time-frequency resources) of just (or only) one single RS type of configured serving cell RS(s) (In other words, the serving cell RS configuration may indicate time-frequency resources for one or more configured serving cell RS(s) (here the "*one or more configured serving cell RS*(*s*)" are all of the configured serving cell RS of which this serving cell RS configuration indicates time-frequency resources), wherein each of these one or more configured serving cell RS(s) has the same RS type. Put differently, each (or every or any or all) configured serving cell RS of which this serving cell RS configuration indicates time-frequency resources has the same RS type (the same RS type as all other configured serving cell RS of which this serving cell RS configuration indicates time-frequency resources). Thus, the serving cell RS configuration indicates time-frequency resources only of configured serving cell RS(s) of one RS type (and indicates no time-frequency resources of configured serving cell RS(s) that have a different RS type than said one RS type). It is further noted that this includes the case that the serving cell RS configuration resources of just (or only) one single serving cell RS).

If the serving cell RS configuration indicates for each of two or more types of configured serving cell RS, respective time-frequency resources, the involved serving RS(s) is/are the RS(s), among the configured serving cell RS, for which the serving cell RS configuration indicates respective time-frequency resources, that has/have the "*correct*" RS type. In particular, if there are multiple involved serving RS(s) of the "correct" RS type (i) one of those may be determined to be the involved serving cell RS, or (ii) more than one (e.g. all) may be determined to be involved serving cell RS (in this case, the trigger condition may be evaluated for each involved serving cell RSs separately). The "correct" RS type may be indicated by an RS type indication in the LTM event configuration indication, or may be given by the current TCI state of the serving cell. Merely for ease of description and clarity, it is often assumed that (i) there is only configured serving cell RS of the "correct" type, and (ii) only one involved serving cell RS determined.

More specifically, the involved serving cell RS(s) may be that RS of the two or more RS types of configured serving cell RS of the indicated serving cell RS configuration that has (as further explained below)
- the same RS type as the QCL RS that is associated with the current serving cell TCI state, or
- is of the type indicated by an RS type indication.

It is noted that the serving cell RS configuration indication and the candidate cell RS configuration indication may be same indication. In particular, the serving cell may be configured as a candidate cell. The serving cell RS configuration indication may be an identifier that identifies/indicates a particular serving cell RS configuration among the configured serving cell RS configuration. The candidate cell RS configuration indication may be an identifier that identifies/indicates a particular candidate cell RS configuration among the configured candidate cell RS configuration. The identifier for the serving cell and the identifier for the candidate cell may be identical.

More specifically, there may be (e.g. exactly) one serving cell RS configuration and (e.g. exactly) candidate cell RS configuration linked to this identifier (ID, e.g. "*LTM-CSI-resourceConfigld-r18*")*.* In other words, a resource configuration ID that points to RS configuration for serving and candidate cells may be used as joint resource configuration for serving and candidate cells. In this case, there is actually only one resource configuration (and hence only one ID) needed to include both serving and candidate cells. In other words, the serving cell RS configuration and the candidate cell RS configuration may be part of one RS configuration that specifies:
- one serving cell RS configuration and one candidate cell RS configuration, or
- one serving cell RS configuration for each of a plurality of RS types and one candidate cell RS configuration for each of a plurality of RS types.

However, the present disclosure is not limited thereto. In general, the serving cell RS configuration indication and the candidate cell RS configuration indication may be different (e.g. different identifiers).

### Trigger condition & L1 measurement report - Steps S1030, S1040, S1050, and S1055

As mentioned above, the UE is to transmit S1050, e.g. to the BS, a layer 1 (L1) measurement report for LTM if he trigger condition of the LTM trigger event is satisfied. In general, the L1 measurement report may indicate results of measurement of the involved RS(s) to the BS. In particular, it may be indicated that the trigger condition is satisfied and/or the trigger event that triggered the L1 measurement report. It is however noted that the present disclosure is not limited to particular details of the L1 measurement report.

The UE may thus determine S1040, by evaluating S1040 (or checking/determining) whether the involved RS(s) satisfy the trigger condition, whether to transmit the L1 measurement report. The UE may periodically evaluate trigger condition. For instance, the trigger condition may be evaluated after each reception occasion at which one of the involved RS should have been received S1030. That is, the UE may not (or only with very bad quality) receive an RS that has been transmitted by the BS. The UE may thus monitor/measure S1030 the signal strength at the time-frequency resources (in with the directionality, reception beam) of the involved RS. The BS may decide/determine based on one or more received L1 measurement reports whether the communication device is to perform an LTM cell switch.

It is further noted that a trigger condition may be evaluated for more than one serving/candidate cell RS. For instance, the UE/BS may determine, in S1020/S1015, one serving cell RS and two candidate cell RS (e.g. a "*first*" and a "*second*" candidate cell RS). The UE would then evaluate the trigger condition (which is here assumed to include just one serving cell RS and just one candidate cell RS): (i) for the serving cell RS and the first candidate cell RS, and (ii) for the serving cell RS and the second candidate cell RS. It is noted that such a situation can also be interpreted as the configuration of two LTM trigger events, with the same trigger condition but different involved RS(s), by the LTM control signalling: (i) a first LTM trigger event that involves said one serving cell RS and the first candidate cell RS, and (ii) a second LTM trigger event that involves said one serving cell RS and the second candidate cell RS.

### Involved RS(s) & Determination of involved RS(s) - step S1020 (UE) and step S1015 (BS)

In general, a trigger event may involve a serving cell RS and/or a candidate cell RS. In other words, the involved RS(s) may include a (involved) serving cell RS and/or a (involved) candidate cell RS. In particular, a trigger condition may be or include a comparison of the measured signal strength/quality of an involved RS with (i) a predetermined/preconfigured threshold, and/or (ii) a comparison of the measured signal strength of involved serving cell RS measured signal strength/quality of involved serving cell RS.

More specifically, the trigger condition of the trigger event may involve a serving cell RS and/or a candidate cell RS. In other words, the trigger condition may be a
- a condition that involves just/only a serving cell RS (and not other RS). In other words, the trigger condition may only involve a comparison of a quantity that corresponds to the quality/signal strength of one serving cell RS with a given threshold (such as the condition of the above-mentioned "*Event LTM2*")*,*
- a condition that involves just/only a candidate cell RS. In other words, the trigger condition only involves a comparison of a quantity that corresponds to the quality/signal strength of one candidate cell RS with a given threshold (such as the condition of the above-mentioned "*Event LTM4*")*,* or
- a condition that involves a serving cell RS and a candidate cell RS. In other words, the trigger condition may involves a comparison of a quantity that corresponds to the quality/signal strength of one candidate cell RS with quantity that corresponds to the quality/signal strength of one serving cell RS with a given threshold (such as the condition of the above-mentioned "*Event LTM3*"*.* Alternatively or in addition, the trigger condition may involve (i) a comparison of a quantity that corresponds to the quality/signal strength of one serving cell RS with a first given threshold and (i) a comparison of a quantity that corresponds to the quality/signal strength of one candidate cell RS with a second given threshold (such as the condition of the above-mentioned "*Event LTM 5*".)

### Configured Reference signal(s) (RS(s))

In general, for both serving cell and candidate cell(s), the UE is configured with reference resource(s) for event triggered L1 measurement. In general, (i) a configured reference signal (RS) may be used as the reference resource, and/or (ii) the TCI state and an associated RS (e.g. an QCL RS or a QCLed RS) are used as the reference resource.

In the present disclosure, these configured reference resource(s) are also referred to as "*configured reference signals*"*.*

More specifically, in general, (if there is an involved serving cell RS), the involved serving cell RS is determined among the configured RS(s) of the serving cell (i.e. the ucrrent); and (if there is an involved candidate cell RS), the candidate cell RS is determined among configured RS(s) of the candidate cell. In other words, the involved serving cell RS is one of the configured serving cell RS(s) and the involved candidate cell RS is one of the configured candidate cell RS(s).

The configured RS(s) of the serving cell, in the present disclosure also referred to as "*configured serving cell RS(s)*" are the RS(s) of the serving cell with which the communication device is configured (in/for the serving cell). In other words, a configured serving cell RS is an RS transmitted by the BS operating the serving cell. "

The configured RS(s) of the candidate cell, in the present disclosure also referred to as "*configured candidate cell RS(s)*" are the RS(s) of a candidate cell with which the communication device is configured (in/for the candidate cell). In other words, a configured candidate cell RS is an RS transmitted by the BS operating the respective candidate cell (thus, in general transmitted by a different BS than the BS transmitted the serving cell RS(s). In case that both serving cell and candidate cell are operated by the same BS, e.g. same gNB-DU (see section of "split gBN architecture"), both serving cell and candidate cell RSs are transmitted by the same BS).

More specifically, the configured serving/candidate cell RS (and thus the involved serving/ candidate cell RS) is one of the RS with which the UE is configured (e.g. is already configured or being configured when the LTM control signalling including the LTM trigger event configuration indication is received). As further explained below, the configured RS(s) may be configured in preparation of the candidate cells (e.g. in step 2 of Fig. 6) and/or as part of the TCI framework (i.e. may be QCL RS(s) or QCLed RS(s) associated with configured serving/candidate cell TCI states). In particular, a configured RS is an RS of which the UE knows the time-frequency resources (i.e. the UE /has been configured with/informed of the time-frequency resources of a configured RS). In general, RS(s) of different types, in particular SSB and CSI-RS can be configured for each of the serving and candidate cell(s).

It is noted that the serving cell refers to the current serving cell of the UE (i.e. the cell that is the serving cell of the UE when the LTM control signalling is received). The serving may be cell from which the UE switches away when/if the (next) LTM switch is performed. The "*candidate cell*" or "*LTM candidate cell*" is candidate cell for an LTM cell switch of the communication device away from the serving cell. Regarding this it is to be noted that there be multiple candidate cells (one of which is indicted by the BS in step 6 of Fig. 6). In the following, merely for ease of understanding and clarity, only one candidate cell is usually explicitly mentioned. If there are multiple candidate cells, for each of the candidate cells, the involved candidate RS may be determined, and the trigger condition may be evaluated for each candidate cell separately (based on the respective candidate RS of said candidate cell).

It is further noted that the serving cell may be configured as a candidate cell (in particular using a similar signalling framework). This may be done in particular for potential future cell switch (e.g. back and forth). In particular, the current serving cell may be (e.g. automatically become without further signalling after the next cell switch away from said current serving cell), a candidate cell for a subsequent cell switch.

### Determination of serving cell RS

In general, if an LTM trigger event involves a serving cell RS, the involved serving cell RS may be determined S1015, by the communication device, based on:
- a serving cell RS indication included in the LTM trigger event configuration indication, and/or
- a current serving cell TCI state (or "*the*" current serving cell TCI state).

In particular, the involved serving cell RS may be given by, or e.g. determined (among the configured serving cell RS(s)) by the communication device just/only based on the serving cell RS indication and/or the current serving cell TCI state.

In particular, if the LTM trigger event configuration indication includes a serving cell RS configuration indication that indicates a serving cell RS configuration that specifies the resources of just one RS type of configured serving cell RS, the communication device may determine, based on the serving cell RS indication (or based on the serving cell RS configuration indication in the serving cell RS indication), that the involved serving cell RS is an serving cell RS with said RS type.

Furthermore, if the LTM trigger event configuration indication includes a serving cell RS configuration indication that indicates a serving cell RS configuration that specifies the resources of multiple RS types of serving cell RSs, the UE may determine the involved serving cell RS, among these multiple configured serving cell RSs, based on an RS type indication included in the LTM trigger event configuration indication.

It is noted that in this case, (i) the configured serving cell RS(s), among which the involved serving cell RS is to be determined, are given/indicated by the serving cell RS configuration indication, and (ii) the determination of the involved serving cell RS among these configured serving cell RSs is based on the RS type indication. More specifically, the UE may determine that the involved serving cell RS is a configured serving cell RS that has the RS type indicated by the RS type indication.

However, in particular if the LTM trigger event configuration indication does not include a serving cell RS configuration indication, the UE may (also/alternatively) determine the involved serving cell RS among:
- the quasi co-location (QCL) RS associated with the current serving cell TCI state, and/or
- QCL RS(s) that are associated with a serving cell TCI state (not necessarily associated with the current serving cell TCI state); and quasi co-located (QCLed) with the QCL RS associated with the current serving cell TCI state. In particular, these QCL RS(s) may not only include the QCL RS of the current TCI state of the serving cell, but also QCL RS(s) associated with any/all other configured TCI state of the serving cell.

In other words, in general, the involved serving cell RS may be determined among (e.g. all) the QCL RS(s) associated with at least one of the configured TCI stated of the serving cell.

In particular, it may be determined that the involved serving cell RS is the QCL RS associated with the current serving cell TCI state. It is noted that, in this case, the configured serving cell RS(s) among which the involved serving cell RS is determined, may include just one configured RS namely the QCL RS associated with the current serving cell TCI state.

Furthermore, for instance, in particular if the serving cell RS indication includes an RS type indication, the involved serving cell RS may be determined among the QCL RSs of the configured serving cell TCI states according to:
- if the QCL RS associated with the current serving cell TCI state has the indicated RS type, that the involved serving cell RS is said QCL RS associated with the current serving cell TCI state; and
- if the QCL RS associated with the current serving cell TCI state has a different RS type than the indicated RS type, that the serving cell RS is an QCL RS that (i) is associated with a serving cell TCI state (e.g. associated with another/different TCI state than the current serving cell TCI state), (ii) QCLed with said QCL RS associated with the current serving cell TCI state, and (iii) has the RS type indicated by the RS type indication.

It is noted that the RS type indication for the serving cell may be given/indicated by a candidate cell RS indication that indicates a candidate cell RS configuration that specifies the resources of just one RS type of configured candidate cell RS. To be specific, the involved serving cell RS may be determined among the QCL RS of the configured serving cell TCI states according to:
- if the QCL RS associated with the current serving cell TCI state has the same RS type as the one configured candidate cell RS indicated by the candidate cell RS configuration, that the involved serving cell RS is said QCL RS associated with the current serving cell TCI state; and
- if the QCL RS associated with the current serving cell TCI state has a different RS type than the one configured candidate cell RS indicated by the candidate cell RS configuration, that the involved serving cell RS is an QCL RS that (i) is associated with a serving cell TCI state (e.g. associated with another/different TCI state than the current TCI state), (ii) QCLed with said QCL RS associated with the current serving cell TCI state, and (iii) has the same RS type as the one configured candidate cell RS indicated by the candidate cell RS configuration.

The involved serving cell RS is thus determined to have the same RS type has the involved candidate cell RS.

For instance, the indicated RS type in the event configuration may be SSB, but the current TCI state of the serving cell has a CSI-RS (e.g. CSI-RS #15) as the QCL RS (i.e. in the present example, CSI-RS #15 is the QCL RS associated with the current serving cell TCI state).

However, there may be another TCI state configured in the serving cell that has an SSB (e.g. SSB#4) as the QCL RS, and the QCL RS associated with the current TCI state (i.e. CSI-RS#15) may be QCLed with the QCL RS of this other TCI state (i.e. CSI-RS#15 may be QCLed with SSB#4). The UE may/will then determine that SSB#4 is the involved serving cell RS and/or use SSB#4 for the event evaluation. It is further noted that the configuration to link CSI-RS#15 to SSB#4 as a QCL chain can be configured inside the existing IE "NZP-CSI-RS" (see parameter "qcl-InfoPeriodicCSI-RS" there.

If a signalling framework without serving cell RS indication is used, the BS may also determine S1015 the involved serving cell RS based (e.g. only) on the current serving cell TCI state. If a signalling framework in which the LTM trigger event configuration indication includes a serving cell RS indication is used, the BS may determine (e.g. choose among the configured serving cell RS(s)), in step S1015, a serving cell RS such it can be indicated to the communication device by including an appropriate serving cell RS indication in the LTM control signalling.

### Determination of candidate cell RS

In general, if an LTM trigger event involves a candidate cell RS, the involved candidate cell RS may be determined S1015, by the communication device, based on:
- a candidate cell RS indication included in the LTM trigger event configuration indication, and/or
- a current serving cell TCI state (or "*the*" current serving cell TCI state).

In particular, the involved candidate cell RS may be given/indicated by, or e.g. determined (among the configured candidate cell RS(s)) by the communication device just/only based on the candidate cell RS indication and/or the current serving cell TCI state. It is noted that the involved candidate cell RS may be determined based on the current TCI state of the serving cell even if the trigger condition does not involve a serving cell RS.

In particular, if the LTM trigger event configuration indication includes a candidate cell RS configuration indication that indicates a candidate cell RS configuration that specifies the resources of just one RS type of configured candidate cell RS, the communication device may determine, based on the candidate cell RS indication (or based on the candidate cell RS configuration indication in the candidate cell RS indication), that the involved candidate cell RS is a candidate cell RS with the said RS type.

Furthermore, if the LTM trigger event configuration indication includes a candidate cell RS configuration indication that indicates a candidate cell RS configuration that specifies the resources of multiple candidate cell RSs, the UE may determine the involved candidate cell RS, among these multiple configured candidate cell RSs, based on:
- a RS type indication included in the LTM trigger event configuration indication. It is noted that in this case, (i) the configured candidate cell RSs, among which the involved candidate cell RS is to be determined, are given/indicated by the candidate cell RS configuration indication, and (ii) the determination of the involved candidate cell RS among these configured candidate cell RSs is based on the RS type. More specifically, the UE may determine that the candidate cell RS is a configured candidate cell RS that has the RS type indicated by the RS type indication; or
- the current serving cell TCI state. It is noted that in this case, (i) the configured candidate cell RSs are given/indicated by the candidate cell RS configuration indication, and (ii) the determination of the involved candidate cell RS among these configured candidate cell RSs is based the current serving cell TCI state (i.e. its RS type). More specifically, the UE may determine that the involved candidate cell RS is a configured candidate cell RS that has the same RS type as the QCL RS that is associated with the current serving cell TCI state.

However, in particular if the LTM trigger event configuration indication does not include a candidate cell RS configuration indication, the UE may (also/alternatively) determine the involved candidate cell RS to be the quasi co-location (QCL) RS associated with a candidate TCI state. In this case, the configured candidate cell RSs among which the involved candidate cell RS is to be determined are given/indicated by the candidate TCI states with which the UE is configured for the candidate cell.

For instance, the UE may determine the involved candidate cell RS among the QCL RS associated with a candidate TCI state (e.g. all or some QCL RSs that are associated with any of the configured candidate TCI states):
- based on an RS type indication included in the LTM trigger event configuration indication (in this case, the determination of the involved candidate cell RS is based on the candidate cell RS indication and the current serving cell TCI state). More specifically, the involved candidate RS(s) may be a/the QCL RS(s) associated with a candidate TCI state that has/have the same RS type as the RS type indicated by the RS type indication. It is noted that, since there may be a plurality of candidate TCI states for a given candidate cell as in the example below, this may lead to determination of multiple involved candidate cell RS (the UE may select one of them based on another criterion or evaluate the trigger condition for each of these involved candidate cell RSs). It is noted that the RS type indication for the candidate cell may be given/indicated by a serving cell RS indication that indicates a serving cell RS configuration that specifies the resources of just one configured serving cell RS. More specifically, the involved candidate cell RS may be a/the QCL RS associated with a candidate TCI state that has/have the same RS type as the one configured serving cell RS indicated by the serving cell RS configuration. The involved candidate cell RS is thus determined to have the same RS type has the involved serving cell RS.
- based on current serving cell TCI state. More specifically, the UE may determine that the involved candidate RS(s) is/are a/the QCL RS associated with a candidate TCI state that has/have the same RS type as the QCL RS that is associated with the current serving cell TCI state. This may also lead to multiple involved candidate TCI states (even for one candidate cell). It is noted that this does not require that there is an involved serving cell RS.

If a signalling framework without candidate cell RS indication is used, the BS may also determine S1015 the involved candidate cell RS based (e.g. only) on the current serving cell TCI state. If a signalling framework in which the LTM event configuration includes a candidate cell RS is used, the BS may determine (e.g. choose among the configured candidate cell RS(s)) in step S1015, a candidate cell RS such it can be indicated to the communication device by including an appropriate candidate cell RS indication in the LTM control signalling.

It is noted that the UE/BS may (i) determine whether the LTM trigger event involves a serving/candidate cell RS, and (ii) if (e.g. only if) the serving cell involves a serving cell RS, determine the serving/candidate cell RS. The UE may determine whether the LTM trigger event involves a serving/candidate cell RS based on the LTM trigger event configuration indication(s). It is further noted that the particular determination method may depend on the trigger event/condition indicated by the LTM trigger event configuration indication. For instance, in case of both of the above-mentioned trigger events "Event LTM 2" and "Event LTM 5", the UE may/will determine that the event involves a serving cell RS and the LTM trigger event configuration indication may include a serving cell RS configuration indication that indicates two configured serving cell RS configurations. However:
- in case of "Event LTM 2", the RS type may be given/indicated by the current TCI state of the UE, whereas,
- in case of "Event LTM 5", the RS type may be given/indicated by an RS type indication indicated by/included in the LTM trigger event configuration indication.

This is merely an example, and the involved RS(s) may be determined be determined among the configured RS(s) independently of the trigger event/condition.

### Candidate TCI state

The configuration of the candidate cell may include the configuration of one or more TCI state, in the present disclosure also referred to as "*candidate TCI state*"*.* More specifically, a candidate TCI state is a TCI state with which the UE is configured for the LTM candidate cell. As an example, the existing candidate TCI state information element of Rel-18 for configuring a candidate TCI state is given beloe is given below:

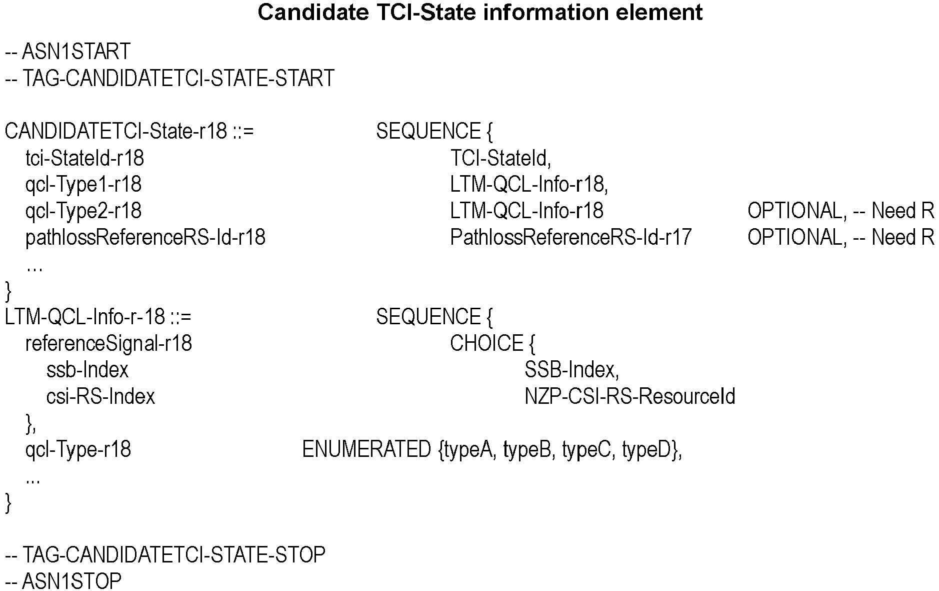

In the following, further details and examples of the above are presented.

### LTM trigger event configuration indication includes Serving and Candidate Cell Resource configuration indication

It is first noted that, in general, if the LTM trigger event configuration indication includes a serving cell resource configuration indication, the determination of the involved serving cell RS (if any) and the determination of the involved candidate serving cell RS (if any) usually does not depend on the current TCI state.

In this section, further details for the scenario that the LTM trigger event configuration indication includes Serving and Candidate Cell Resource configuration indication are described. In particular, two explicit signalling examples (i.e. the First and the Second signalling example) are given for this scenario. It is noted that present section also applies to the case that there is only a serving or a candidate cell RS involved.

The RS types are assumed to be SSB and CSI-RS. For each of the serving and candidate cell(s), the UE is configured with an SSB type RS and a CSI-RS type RS (by the respective LTM-CSI-ResourceConfig information element). In the present example/case, configured reference signal(s) are thus used as the reference resource. It is also noted that these examples allow to include the serving cell (e.g. always) as a LTM candidate cell. This may allow to configure RS measurements for the serving cell in the same way as for the candidate cell(s) and/or potentially facilitates the subsequent LTM cell switch. To support CSI-RS as measurement RS for Rel-19, a CSI-RS configuration can be added into the LTM measurement resource configuration. To enable event triggered reporting for Rel-19, event configuration(s) can be added into LTM reporting configuration

### First signaling example

A first signalling example for a signalling framework in which the TM trigger event configuration indication includes a serving and a candidate cell resource configuration indication is given below:

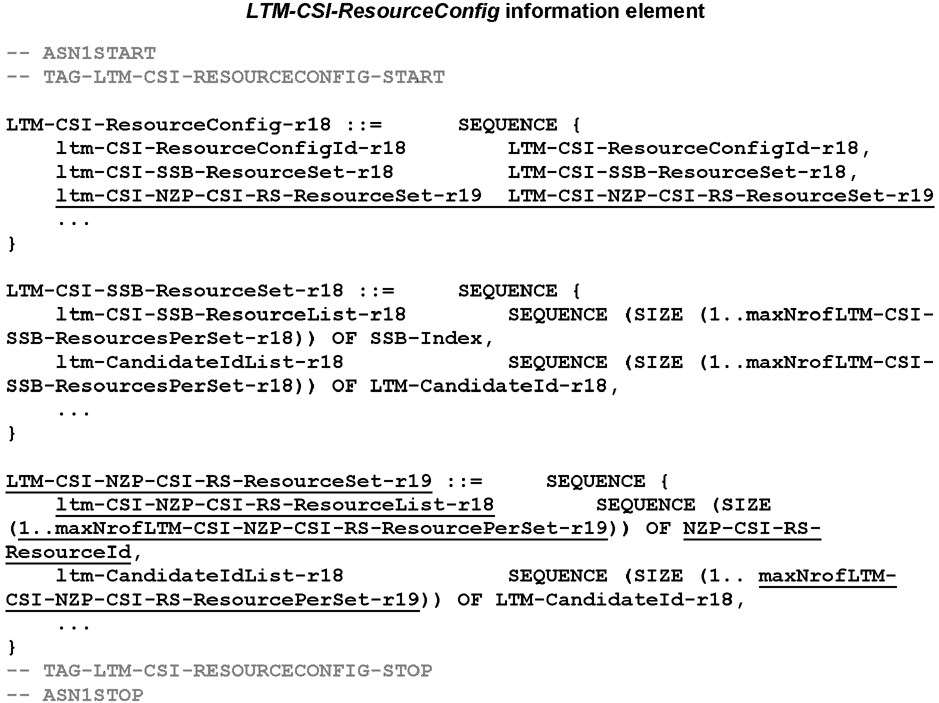

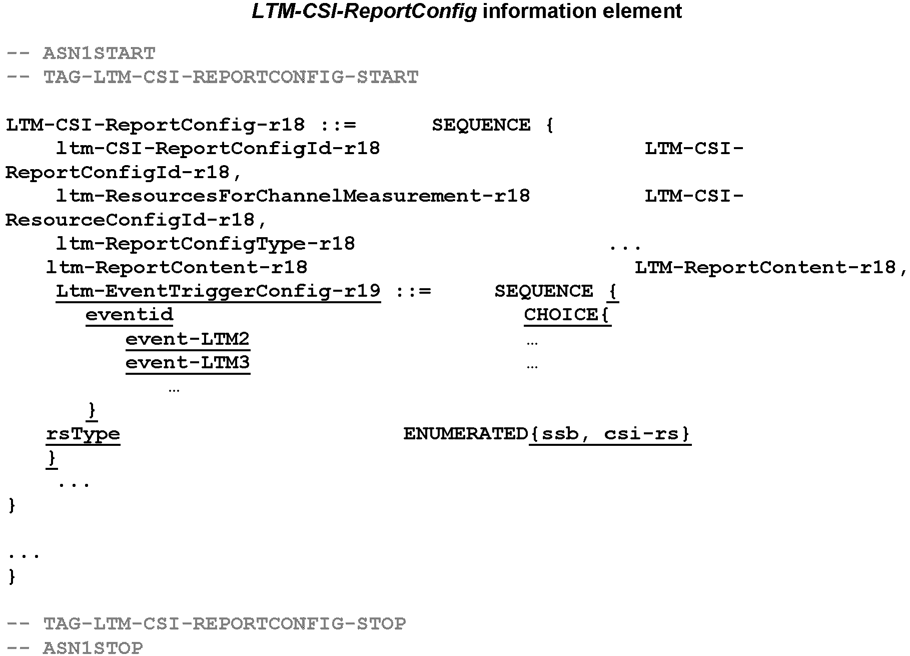

It is noted that underlined portions in the above information elements indicate changes with respect to the current (Rel. 18) signalling (this applies also to the other signalling examples presented in the present disclosure).

It is further noted that, according to the first signalling example, the LTM control signalling may include the "*LTM-CSI-ReportConfig*" information element, and the UE may obtain the LTM trigger event configuration indication(s) from the "*LTM-CSI-ReportConfig*" information element. In particular, in the first signalling example, the LTM trigger event configuration indication includes an (explicit) RS type indication which can be obtained from the *"rsType"* element. In other words, each event configuration (i.e. in "*Ltm-EventTriggerConfig-r19*" of the "*LTM-CSI-ReportConfig*" information element), is configured with an RS type (SSB vs. CSI-RS) to ensure the same RS type between serving and candidate cells.

The LTM trigger event configuration indication further includes a Serving and Candidate Cell Resource configuration indication, which can be obtained (be the UE) from the "*LTM-CSI-ResourceConfigld-r18*"*.* The serving/candidate cell resource configuration indicated by "*LTM-CSI-ResourceConfigld-r18"* is that configured serving/candidate cell resource configuration with the ID indicated by "*LTM-CSI-ResourceConfigId-r18*"*.* More specifically, the target/candidate cell resource configuration are/have been configured by control signalling including one or more of the above "*LTM-CSI-ResourceConfig*" information element(s). As can be seen, these "*LTM-CSI-ResourceConfig*" information element(s), configure each serving/candidate resource configuration with an identifier "LTM-CSI-ResourceConfigld-r18". More specifically, the time-frequency resources of the RS of the SSB type are indicated by the existing syntax element "*LTM-CSI-SSB-ResourceSet-r18*"*,* and the time-frequency resources of the RS of the NZP-CSI-RS type are indicated by the new syntax element "*LTM-CSI-NZP-CSI-RS-ResourceSet-r19*"*.*

The trigger event configuration(s) is thus associated with a configured resource configuration by indicating a resource configuration ID. In other words, "*LTM-CSI-ResourceConfigId-r18*" is an example in which the candidate cell RS configuration indication is an identifier of a serving/candidate cell RS configuration.

As can also be seen each, each of the serving and candidate resource configuration includes a RS configuration of an SSB type RS (configured via/by "*Itm-CSI-SSB-Resource Set-18*") and a RS configuration of an NZP-CSI-RS type RS (configured via/by "*LTM-CSI-NZP-CSI-RS-ResourceSet-r19*")*.* The involved serving/candidate cell RS is then that of the configured serving/candidate cell RS with the type indicated by the "*rsType*" element in "*Ltm-EventTriggerConfig-r19*" of the "LTM-CSI-ReportConfig" information element.

The First signalling example is thus an example of the case that (i) the serving cell RS configuration specifies, for each of two or more configured serving cell RS, respective time-frequency resources, (ii) the candidate cell RS configuration specifies, for each of two or more configured candidate cell RS, respective time-frequency resources and (iii) involved serving and/or candidate cell RS can be determined among the respective plurality of configured RS based on the RS type indicated by LTM trigger event configuration indication obtained from the LTM control signalling.

It is noted that this is only a very specific example and the present disclosure is not limited thereto. In particular, the "*rsType*" element may be placed outside "*Ltm-EventTriggerConfig-r19*" element.

It is further noted that the element "tm-EventTriggerConfig-r19" in particular the "*eventid*" part indicates the trigger event and the trigger condition (this also applies to the second signalling example).

It is noted that NZP-CSI-RS is used in the first (and second) signalling example is merely used as an example. Also, merely for clarity of the description, the present disclosure usually refers just to the types of reference signals being CSI-RS and SSB. However, the present disclosure applies to other types of RS, in particular to RS such as TRS (see IE *TRS-ResourceSet*), CSI-RS for mobility (see IE *CSI-RS-ResourceConfigMobility*), SSB and the like.

The first signalling example, and in general usage of resource configurations specifying the configuration of multiple RS together with a RS type indication in the LTM control signalling including the LTM trigger even configuration indication, allows to support different types of RS such as SSB and CSI-RS while providing a flexible signalling framework. In particular, it may become easy to change the RS-type and/or RS that by including a different type indication, which may also reduce signalling overhead.

### Second signaling example

A second signalling example for a signalling framework in which the TM trigger event configuration indication includes a serving and a candidate cell resource configuration indication is given below:

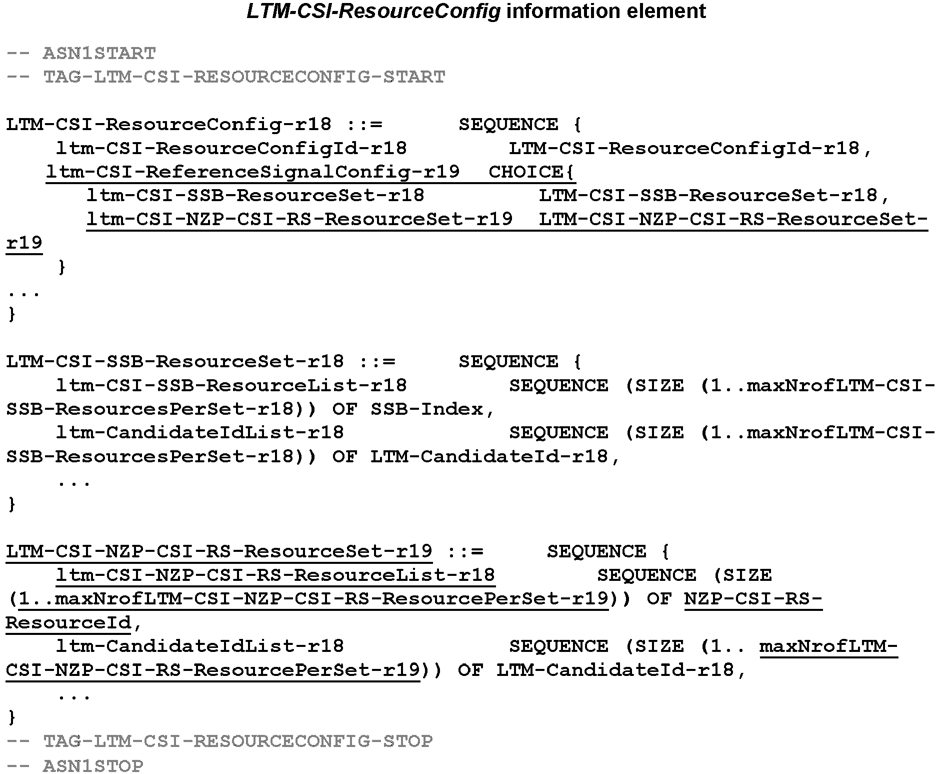

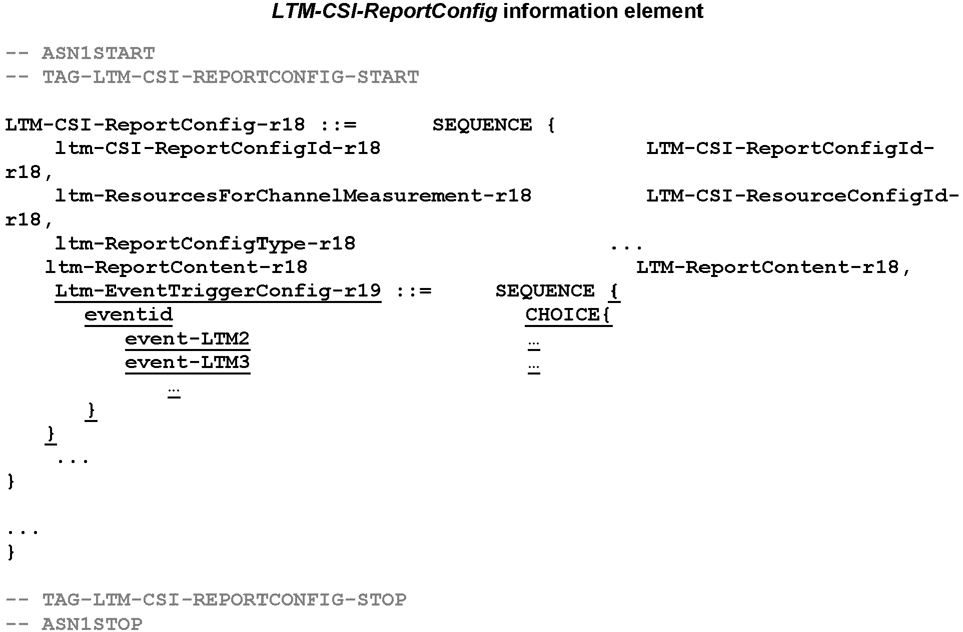

In the following, mostly important differences with respect to the first signalling example are explained in detail.

According to the second signalling example, the LTM control signalling may include the "*LTM-CSI-ReportConfig*" information element, and the UE may obtain the LTM trigger event configuration indication(s) from the "*LTM-CSI-ReportConfig*" information element.

It is further noted that, in contrast to the first signalling example, in the second signalling example, the LTM trigger event configuration indication does not includes an (explicit) RS type indication (i.e. there is not "*rsType"* element). Furthermore, in the second signalling example, each of the serving and candidate resource configuration includes a configuration of just one RS type (i.e. either SSB configured via/by "*Itm-CSI-SSB-Resource Set-18* or NZP-CSI type RS configured via/by "*LTM-CSI-NZP-CSI-RS-ResourceSet-r19*")*.* Like in the first signalling example, the event configuration is thus associated with a resource configuration by a resource configuration ID.

It is noted that the RS type is still implicitly given since (and can thus be determined e.g. for event evaluation) based on the involved RS signal(s), i.e. by the RS type of the RS signals indicated/identified by "LTM-CSI-ReportConfigId-r18". In other words, the RS-type is differentiated by resource configuration itself.

Furthermore, like in the first signalling example, the "LTM-CSI-ReportConfigld-r18" may be a joint indication of both a serving cell RS configuration and a candidate cell RS configuration. Furthermore, the RS type of the one serving cell RS and the RS type of the one candidate cell RS indicated by the "LTM-CSI-ReportConfigld-r18" identifier may be identical/the same. In this way, the same RS type between serving and candidate cells may be ensured.

Since different RS types belong to different resource configurations, the second signalling example (or in general when the resource configurations specify the configuration of just one RS type), allows to support CSI-RS (or in general different additional RS types) without affecting the legacy design (as much as in the first signalling example) because newly introduced CSI-RS can be configured as a separate resource configuration.

### Determination of involved signals among QCL RS of configured TCI states

In this section, further details for the scenario that (i) the involved serving cell RS is determined among (or is one of) the QCL RS(s) associated with at least one of the configured TCI stated of the serving cell, and (ii) the involved candidate cell RS is determined among (or is one of) the QCL RS(s) associated with at least one of the configured TCI stated of the candidate cell. It is noted that present section can also be applied to the case that either only a serving cell RS or only a candidate cell RS is involved. The involved serving/candidate RS(s) may be selected from these configured QCL RS. This is thus an example in which the TCI state and associated RS are used as the reference resource. A particular advantage here is to make use of existing candidate TCI state configuration without need for additional resource configuration for event triggered measurement.

More specifically, a TCI state is usually associated with configured RS (i.e. SSB or CSI-RS) as QCL information. In other words, as explained in more detail above, a TCI state in general indicates/includes a RS, also referred to as QCL RS. Since the UE is usually configured with a plurality of TCI states for the serving cell and the candidate cell(s), the UE is configured with a plurality of configured candidate/serving cell QCL RSs. In particular, in Rel-18 LTM, for each candidate cell, the UE can be configured with one or more TCI states (also called candidate TCI state). The original purpose of candidate TCI states was for UE to achieve early DL synchronization before switching to the candidate cell to save the cell switching delay.

For an event evaluation for the candidate cell, UE may choose one or more QCL RS from the candidate TCI states that are associated with the same RS type as the QCL RS of the indicated/current TCI state of the serving cell, or alternatively follow an RS type indication. The candidate TCI states are thus used as reference resource for LTM measurement event evaluation and reporting for candidate cells. The present scenario thus makes use of the fact that candidate TCI states already support SSB and CSI-RS as QCL reference signal.

The UE may use the QCL RS of the indicated/current TCI state of the serving state as the involved RS. To ensure same RS type between serving and candidate cells, a QCL RS that associated with a serving cell TCI state other than the current TCI state may be used. For instance, for an event evaluation for the serving cell:
- the current beam (i.e. the QCL RS associated with the indicated/current TCI state) may be used as reference resource, or (in particular if the QCL RS associated with the indicated/current TCI state as not the correct RS type), or
- the QCL RS that (i) is associated with a serving cell TCI state (e.g. associated with another/different TCI state than the current TCI state), (ii) QCLed with said QCL RS associated with the current serving cell TCI state, and (iii) has the correct RS type may be used as reference resource.

The QCL RS associated with the indicated/current TCI state may not have the correct RS type,
- if the RS type of the QCL RS associated with the indicated/current TCI state is different than the RS type indicated by an RS type indication (this applies to signalling frameworks that use RS type indication as part of the LTM event configuration indication), or
- if (i) there is a candidate cell RS configuration indication that indicates a candidate cell RS configuration that specifies the resources of just one RS type of configured candidate cell RS and (ii) the RS type of the QCL RS associated with the indicated/current TCI state is different than said just one RS type.

In particular, if an RS type is configured in event configuration (i.e. if there is an RS type indication), the UE selects the candidate TCI states with the configured/indicated RS type. If the indicated TCI state of the serving cell has a different type of QCL RS, another type of RS which is QCLed with the QCL RS of indicated TCI state will be used.

In other words, for each of event evaluation for serving cell, UE uses a QCL RS from the configured TCI state in the serving cell. For each of event evaluation for candidate cell, the UE chooses the involved candidate RS from the QCL RS of the candidate cell TCI states that are (i) associated with the same RS type as that in the indicated/current TCI state of the serving cell, or (ii) have the RS type indicated by the RS type indication.

An explicit example for this will be given with reference to the two tables below:

| |
|---|
| TCI 1 (SSB 1 in cell A) |
| TCI 2 (SSB 2 in cell A) |
| TCI 3 (SSB 3 in cell A) |
| TCI 20 (CSI-RS 12 in cell A) |
| TCI 21 (CSI-RS 13 in cell A) |
| TCI 25 (CSI-RS 17in cell A) |

| |
|---|
| TCI 1 (SSB 1 in cell B) |
| TCI 3 (SSB 3 in cell B) |
| TCI 16 (CSI-RS 1 in cell B) |
| TCI 17 (CSI-RS 2 in cell B) |
| |
| |

More specifically, it is assumed that there are two candidate cells, "Cell A" and "Cell B". The candidate TCI states for Cell A are shown in the table on the left, and the candidate TCI states for Cell B are shown in the table on the right. It is further assumed that the trigger condition is given by "Event LTM3", i.e. that "Beam of candidate cell becomes amount of offset better than beam of serving cell", and that the current beam of the serving cell, Cell C, is TCI-State #1 with SSB#1 as QCL RS. In other words, TCI-State #1 is the current TCI state and SSB#1 is the QCL RS associated with TCI-State #1. The UE selects the candidate TCI states that are associated with the same QCL RS as that in the indicated/current TCI state of the serving cell. UE measures the QCL RSs for the selected candidate TCI states and QCL RS of the indicated TCI state of the serving cell. This is thus an example in which multiple involved candidate cell RSs are determined. More specifically, for evaluating event LTM3, the UE will/may then select TCI states 1-3 from cell A (since these are the QCL RS of Cell A of the RS type "SSB") and TCI states 1 and 3 from cell B (since these are the QCL RS of Cell B of the RS type "SSB") and measure the corresponding SSBs and compare with the measurement of SSB#1 from serving cell. Thus 5 trigger event evaluations in the "worst" (or maximum) case. On the other hand, if UE already finds the event condition is satisfied by evaluating first one of those involved QCL RSs, UE can stop the evaluation of the event and trigger the report immediately. Alternatively, UE can compare the measurement results obtained from all involved QCL RSs from the candidate cells and select the best result. The UE may then evaluate the trigger condition by comparing the best result from candidate cells with the serving cell. In this case, event condition is only evaluated once.

In general, one trigger event can trigger thus for different serving/candidate RS. In such a case (so that the BS knows the serving/candidate RS that triggered the L1 measurement report), the triggering RS may be indicated by the UE in the L1 measurement report. The BS may then determine the RS based also on the L1 report among the possible RS(s). That is, the BS knows the configured TCI states of the UE and can determine the group of RS(s) (i.e. a "group" of RS is a plurality of RS). For instance, in the above example, the group includes QCL RS of TCI 1-3 for cell A and TCI 1 and 3 for cell B. The BS then determines to which of the RS in said group a received/given L1 measurement report relates based on the indication in the L1 measurement report.

### Candidate Cell Resource configuration indication and TCI state based reference resource for serving cell

As another example, the involved RS(s) may be determined (i) for the candidate cell among candidate cell RS(s) indicated by a candidate cell resource configuration indication, and (ii) for the serving cell among QCL RS associated with configured TCI states of the serving cell. In other words, the current TCI state of the serving cell, in particular QCL RS from the current TCI state, is used as reference resource for the serving cell. A configured serving cell RS is used as the reference resource for the serving cell.

The involved candidate cell RS(s) is/are thus given by an explicit configured reference signal set, and the involved serving cell RS is based on the indicated/current TCI state. It is noted that the serving cell may not be configured as a candidate cell in the examples of this section (in particular since no serving cell resource configuration indication is included in the LTM trigger event configuration indication). Further Details of this will be discussed with reference to *"Example A", "Example B"* and *"Example C*" given in the table below:

| | Measurement resource configuration for candidate cells (involved candidate cell RS) | Serving cell measurement RS (involved serving cell RS) | Rule for same RS type | Use case or particular benefit |
|---|---|---|---|---|
| Example A | one candidate resource configuration includes both SSB and CSI-RS configuration | QCL RS of indicated TCI state | Candidate cell follows the RS type of the indicated TCI of the serving cell | More flexible as RS type can be dynamically changed (following the DCI indicated TCI state in serving cell) |
| Example B | | QCL RS of indicated TCI state or another QCLed RS | Serving and candidate cell follow RS type configuration/indication | Reduced measurement effort by semi-statically configured RS type |
| Example C | separate resource configuration for different RS type // one candidate resource configuration includes either an SSB or CSI-RS RS configuration | QCL RS of indicated TCI state or another QCLed RS | serving cell follows the RS type associated with the candidate cell resource configuration | Reduced measurement effort by semi-statically configured RS type |

In Example A and Example B, there is candidate cell resource configuration that indicates the time-frequency resources of multiple configured candidate cell RS (of different RS types).

In Example A, the LTM trigger event configuration does not include an RS type indication. The involved serving cell RS is determined to be the QCL RS of indicated/current TCI state of the serving cell. The candidate cell follows the RS type of the QCL RS of current TCI state of the serving cell. More specifically, the involved candidate serving cell RS is that RS of multiple configured candidate cell RSs that has the same RS type as the QCL RS of indicated/current TCI state of the serving cell.

In Example B, the LTM trigger event configuration includes an RS type indication. The candidate and the serving cell both follow this RS type configuration/indication. More specifically, the involved candidate cell RS is that RS of multiple configured candidate cell RSs that has the RS type indicated by the RS type indication. The involved serving cell RS is determined to be the QCL RS of indicated/current TCI state of the serving cell if said QCL RS of the indicated/current TCI state of the serving cell has the RS type indicated by the RS type indication. If said QCL RS of indicated/current TCI state of the serving cell has not the RS type indicated by the RS type indication, the involved serving cell RS is an QCL RS that (i) is associated with a serving cell TCI state, (ii) QCLed with said QCL RS associated with the current serving cell TCI state, and (iii) has the RS type indicated by the RS type indication.

In Example C, the candidate cell resource configuration indicates the time-frequency resources of just/only one RS type of configured candidate cell RS (i.e. all candidate cell RS of which the candidate cell resource configuration indicates the time-frequency resource have the same RS type). Accordingly, the involved candidate cell RS is determined to be the one(s) with the said RS type. Furthermore, in Example C, the LTM trigger event configuration does not include an RS type indication. The serving cell follows the RS type of the said one configured candidate cell RS. More specifically, the involved serving cell RS is determined to be the QCL RS of the indicated/current TCI state of the serving cell if said QCL RS of indicated/current TCI state of the serving cell has the same RS type as the one configured candidate cell RS. If said QCL RS of indicated/current TCI state of the serving cell has not RS type as the one configured candidate cell RS, the involved serving cell RS is an QCL RS that (i) is associated with a serving cell TCI state, (ii) QCLed with said QCL RS associated with the current serving cell TCI state, and (iii) has the same RS type as the one configured candidate cell RS.

In this way, in each of the Example A to C, it is ensured that the involved candidate RS and the involved serving cell RS have the same RS type. Furthermore, each of Example A to C may allow to not always the include serving cell as a candidate cell for measurement resource configuration.

### Serving cell resource configuration indication and TCI state based reference resource determination for candidate cell

As another example, the involved RS(s) may be determined (i) for the serving cell among serving cell RS(s) indicated by a serving cell resource configuration indication, and (ii) for the candidate cell among QCL RS associated with configured TCI states of the candidate cell. In other words, the candidate TCI state(s) of the candidate cell, in particular QCL RS associated with candidate TCI state, is/are used as reference resource for the candidate cell and the configured serving cell RS is used as the reference resource for the serving cell. The involved serving cell RS is thus given by an explicit configured reference signal set, and the involved candidate cell RS is based on the candidate TCI states.

Further details of this will be discussed with reference to *"Example D"* and *"Example* E" given in the table below:

| | Measurement resource configuration for candidate cells | Serving cell measurement RS | Rule for same RS | Use case or benefit |
|---|---|---|---|---|
| Example D | Candidate TCI states with the corresponding QCL RS (see fourth column) | one serving cell resource configuration includes both SSB and CSI-RS | Serving and candidate cell follow the RS type configuration/indication | Reduced measurement effort by semi-statically configured RS type |
| Example E | | separate resource configuration for different RS type | Candidate cell follows the RS type associated with the serving cell resource configuration | |

In Example D, the LTM trigger event configuration includes an RS type indication. The candidate and the serving cell both follow this RS type configuration/indication. More specifically, there is a serving cell resource configuration that indicates the time-frequency resources of multiple configured serving cell RS (of different RS types). The involved serving cell RS is that RS of multiple configured serving cell RSs that has the RS type indicated by the RS type indication. Furthermore, the involved candidate cell RS(s) is/are determined to be the a/the QCL RS(s) that (i) is/are associated with a candidate TCI state and (ii) has/have the RS type indicated by the RS type indication.

In Example E, the serving cell resource configuration indicates the time-frequency resources of just/only one RS type of configured serving cell RS (i.e. all serving cell RS of which the serving cell resource configuration indicates the time-frequency resource have the same RS type). Accordingly, the involved serving cell RS is determined to be one(s) with the said RS type. Furthermore, in Example E, the LTM trigger event configuration does not include an RS type indication. The candidate cell follows the RS type of the said one configured serving cell RS. More specifically, the involved candidate cell RS(s) is/are the a/the QCL RS(s) that is/are (i) associated with a candidate TCI state and (ii) has/have the same RS type as the RS type the one configured serving cell RS.

In Example D and E, in each of event configuration, a RS type is configured to ensure same between serving and candidate cells (in example E implicitly). For the candidate cell, UE chooses the RS from the candidate TCI states associated with the configured RS type. In particular, from the QCL RS(s) associated with the candidate TCI states, the QCL RS(s) that have the same RS type as the involved serving cell RS are used as reference resource/involved candidate RS. As mentioned above, a resource configuration ID may be used to associate the RS configuration of the serving cell to an event configuration In this way, in each of the Example D and E, it is ensured that the involved candidate RS and the involved serving cell RS have the same RS type. Furthermore, Example D and E may have no or only reduced impact on LTM measurement resource configuration in Rel-18.

Benefit: Compared to embodiment 1, there is no need to always include serving cell as a candidate cell for measurement resource configuration. The reference resources for serving cell can be configured inside the serving cell configuration (e.g. ServingCellConfig), which is separate from configurations for candidate cells..

For the serving cell measurement resource configuration, a new IE can be used that is located inside *ServingCellConfig* → *CSI-MeasConfig,* rather than integrated into Rel-18 LTM measurement resource configuration IE (*LTM-CSI-ResourceConfig*) which is located outside *ServingCellConfig.* An example of such a information element for configuring serving cell RS for LTM event triggered measurement and how it is linked to event configuration is given by the third signaling example below:

### Third signaling example

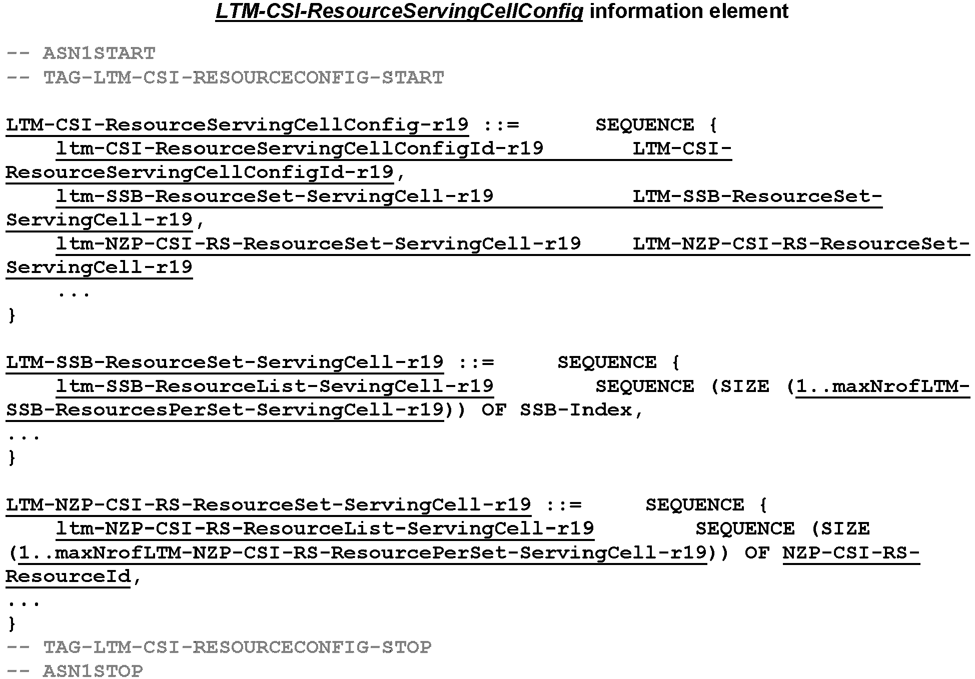

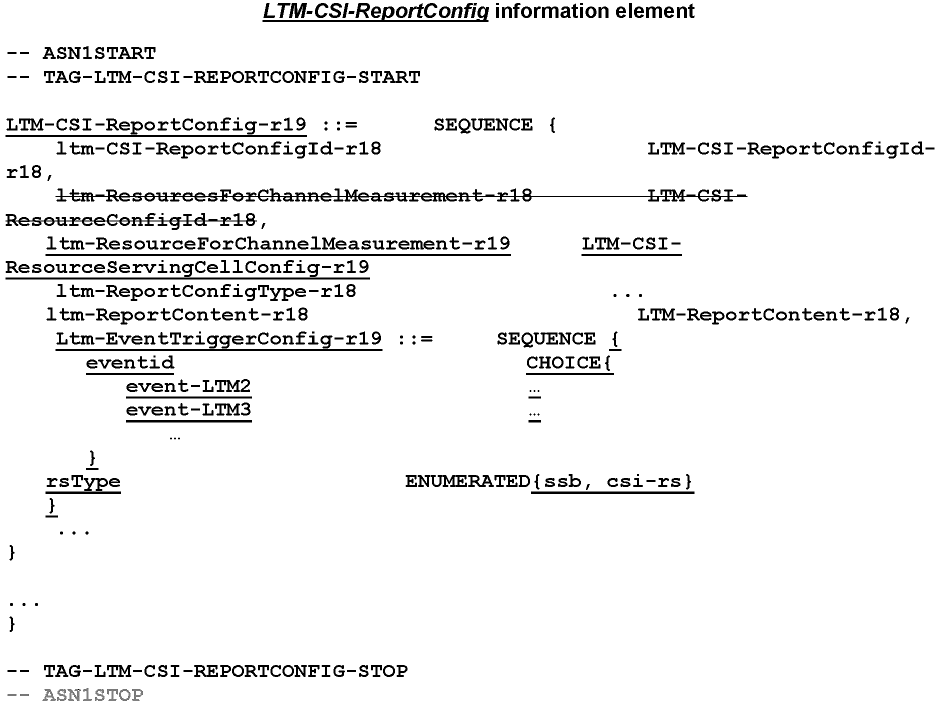

As can be seen, the new *"LTM-CSI-ReportConfig"* information element includes the new syntax element *"ltm-ResourceForChannelMeasurement-r19''* instead of the existing syntax element *"Itm-ResourcesForChannelMeasurement-r18,* which is deleted. A reason is that the old one points to the candidate cell resource configuration. The other changes in the *"LTM-CSI-ReportConfig"* information element are similar as in the First signalling example and have already been explained above.

A new information element *"LTM-CSI-ResourceServingCellConfig information element',* which indicates/specifies a serving cell resource configuration of each of multiple serving cell RS(s) of different types, is introduced. As can be seen, *"LTM-CSI-ResourceServingCellConfig information element'* also includes and identifier (i.e. LTM-CSI-ResourceServingCellConfig-r19), which can be referred via the syntax element "LTM-CSI-ResourceServingCellConfig-r19" in the the new syntax element *"ltm-ResourceForChannelMeasurement-r19"* of the new *"LTM-CSI-ReportConfig"* information element.

### Further Variants and/or Details, including Hardware and Software Implementation of the present disclosure

In the following, variants and/or details of the present disclosure are described.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Terminology

In the present disclosure, UEs, base stations, and procedures are described for the new radio access technology envisioned for the 5G mobile communication systems, but which may also be used in LTE mobile communication systems or future mobile communication systems. Different implementations and variants are explained as well. The disclosure was facilitated by the discussions and findings as described herein and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### User Equipment

A ***terminal*** or ***user terminal*** or ***user device*** or ***mobile station*** or ***mobile node*** or ***mobile device*** is referred to in the LTE and NR as a ***user equipment (UE).*** This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as IoT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes. Accordingly, unless context indicates otherwise, the terms *"(user) terminal", "user device", "user equipment (UE)", "mobile station*/*node*/*device", "enB",* and the like are used interchangeably.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

A base station may be a ***scheduling node*** or ***network node,*** e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system. Accordingly, unless context indicates otherwise, the terms *"base station", "scheduling node", "network node", "gnB", "enB", "scheduling device",* and the like are used interchangeably.

### Uplink/Oownlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Numerology

In general (like in the new radio system 5G-NR), for each numerology and carrier a resource grid of subcarriers and OFDM symbols may be defined respectively for uplink and downlink. Each element in the resource grid is called a resource element (RE) and is identified based on the frequency index in the frequency domain and the symbol position in the time domain (see e.g. 3GPP TS 38.211 v15.6.0 or e.g. v16.2.0, section 4). In other words, the term "resource element" can be used to denote a minimum resource unit being composed of one subcarrier for the length of one OFDM/SC-FDMA symbol.

For instance, downlink and uplink transmissions may be organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

The OFDM numerology (e.g. subcarrier spacing, OFDM symbol duration, cyclic prefix (CP) duration, number of symbols per scheduling interval) that is suitable for one use case might not work well for another. For example, subcarrier spacing of 15kHz, 30kHz, 60 kHz... may be considered.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a communication device is provided. The communication device comprises a circuitry and a transceiver. The circuitry, in operation, obtains, from a Layer 1/Layer 2 Triggered Mobility (LTM) control signalling, an LTM trigger event configuration indication. In particular: (i) the LTM trigger event configuration indication indicates a configuration of an LTM trigger event that involves reference signals (RS(s)); (ii) the involved RS(s) include a serving cell RS and/or a candidate cell RS; (iii) the serving cell RS is an RS of a serving cell of the communication device; (iv) the candidate cell RS is an RS of an LTM candidate cell for an LTM cell switch of the communication device away from the serving cell; and (v) the communication device is to transmit, when the involved RS(s) satisfy a trigger condition of the LTM trigger event, a layer 1 (L1) measurement report for LTM on measurement result(s) of the involved RS(s). Furthermore, the circuitry, in operation, determines, if the LTM trigger event involves the serving cell RS, the serving cell RS among configured RS(s) of the serving cell with which the communication device is configured based on: (a) a serving cell RS indication included in the LTM trigger event configuration indication, and/or (b) a current serving cell TCI state, wherein the current serving cell TCI state is a TCI state that is currently used by the communication device in the serving cell. Furthermore, the circuitry, in operation, determines, if the LTM trigger event involves the candidate cell RS, the candidate cell RS among configured RS(s) of the candidate cell with which the communication device is configured based on (a) a candidate cell RS indication included in the LTM trigger event configuration indication, and/or (b) the current serving cell TCI state. Furthermore, the circuitry, in operation, determines, by evaluating whether the determined serving cell and/or determined candidate cell RS satisfy the trigger condition, whether to transmit the L1 measurement report. The transceiver, in operation: (i) receives the LTM control signalling; and (ii) transmits, if it is determined that the L1 measurement report is to be transmitted, the L1 measurement report.

According to a second aspect provided in addition to the first aspect: (i) the serving cell RS indication and/or the candidate cell RS indication includes a RS type indication; and (ii) the RS type indication indicates an RS type of the involved RS(s).

According to a third aspect provided in addition to the second aspect, if the LTM trigger event involves the serving cell RS: (i) the serving cell RS indication includes the RS type indication and a serving cell RS configuration indication; (ii) the serving cell RS configuration indication indicates a serving cell RS configuration with which the communication device is configured, wherein the serving cell RS configuration indicates, for each of two or more configured serving cell RS, respective time-frequency resources, the two or more configured serving cell RS have mutually different RS types and include a configured serving cell RS that is of the indicated RS type; and (iii) the circuitry, in operation, determines that the serving cell RS is the configured serving cell RS that is of the indicated RS type.

According to a fourth aspect provided in addition to the second aspect, if the LTM trigger event involves the serving cell RS, the serving cell RS indication includes the RS type indication. Furthermore, the circuitry, in operation, determines: (i) if a quasi co-location (QCL) RS associated with the current serving cell TCI state has the indicated RS type, that the serving cell RS is the QCL RS associated with the current serving cell TCI state; and (ii) if the QCL RS associated with the current serving cell TCI state has a different RS type than the indicated RS type, that the serving cell RS is an QCL RS that is: (a) associated with a serving cell TCI state, (b) quasi co-located, QCLed, with the QCL RS associated with the current serving cell TCI state, and (c) has the indicated RS type.

According to a fifth aspect, provided in addition to any of the second to the fourth aspect, if the LTM trigger event involves the candidate cell RS: (i) the candidate cell RS indication includes the RS type indication and a candidate cell RS configuration indication; (ii) the candidate cell RS configuration indication indicates a candidate cell RS configuration with which the communication device is configured, wherein the candidate cell RS configuration indicates, for each of two or more configured candidate cell RS, respective time-frequency resources, the two or more configured candidate cell RS have mutually different RS types and include a configured candidate cell RS that is of the indicated RS type; and (iii) the circuitry, in operation, determines that the candidate cell RS is the configured candidate cell RS that is of the indicated RS type.

According to a sixth aspect, provided in addition to any of the second to the fourth aspect, if the LTM trigger event involves the candidate cell RS: (i) the candidate cell RS indication includes the RS type indication; and (ii) the circuitry, in operation, determines that the candidate cell RS is an RS that has the indicated RS type and is a quasi co-location (QCL) RS associated with a candidate TCI state, wherein the candidate TCI state is a TCI state with which the communication device is configured for the LTM candidate cell.

According to a seventh aspect provided in addition to the first aspect, if the LTM trigger event involves the serving cell RS: (i) the serving cell RS indication includes a serving cell RS configuration indication; (ii) the serving cell RS configuration indication indicates a serving cell RS configuration with which the communication device is configured, wherein the serving cell RS configuration indicates time-frequency resources for one or more configured serving cell RS(s), wherein each of the one or more configured serving cell RS(s) has a same RS type; and (iii) the circuitry, in operation, determines that the serving cell RS is one of the one or more configured serving cell RS.

According to an eighth aspect provided in addition the seventh aspect, if the LTM trigger event involves the candidate cell RS: (i) the candidate cell RS indication includes a candidate cell RS configuration indication; (ii) the candidate cell RS configuration indication indicates a candidate cell RS configuration with which the communication device is configured, wherein the candidate cell RS configuration indicates time-frequency resources of one or more configured candidate cell RS(s), wherein each of the one or more configured candidate cell RS(s) has the same RS type; and (iii) the circuitry, in operation, determines that the candidate cell RS is one of the one or more configured candidate cell RS.

According to a ninth aspect provided in addition the seventh aspect, if the LTM trigger event involves the serving cell RS and the candidate cell RS: the circuitry, in operation, determines that the candidate cell RS is a quasi co-location (QCL) RS associated with an candidate TCI state that has the same RS type as the one or more configured serving cell RS, wherein the candidate TCI state is a TCI state with which the communication device is configured for the LTM candidate cell.

According to a tenth aspect provided in addition to the first aspect, if the LTM trigger event involves the serving cell RS, the circuitry, in operation determines that the serving cell RS is a quasi co-location, QCL, RS that is associated with the current serving cell TCI state.

According to an eleventh aspect provided in addition to the tenth aspect, if the LTM trigger event involves the serving cell RS and the candidate cell RS, the circuitry, in operation determines that the candidate cell RS is an RS that: (i) has a same RS type as the quasi co-location (QCL) RS that is associated with a current serving cell TCI state, and (ii) is an QCL RS associated with a candidate TCI state, wherein the candidate TCI state is a TCI state with which the communication device is configured for the LTM candidate cell.

According to a twelfth aspect provided in addition to the tenth aspect, if the LTM trigger event involves the serving cell RS and the candidate cell RS: (i) the candidate cell RS indication includes a candidate cell RS configuration indication; (ii) the candidate cell RS configuration indication indicates a candidate cell RS configuration with which the communication device is configured; (iii) the candidate cell RS configuration indicates, for each of two or more configured candidate cell RS, respective time-frequency resources, the two or more configured candidate cell RS have mutually different RS types and include a configured candidate cell RS that has a same RS type as the QCL RS that is associated with the current serving cell TCI state; and (iv) the circuitry, in operation, determines that the candidate cell RS is the configured candidate cell RS that has the same RS type as the QCL RS that is associated with the current serving cell TCI state.

According to a thirteenth aspect, provided in addition to the first aspect, if the LTM trigger event involves the candidate cell RS and the serving cell RS, the candidate cell RS indication includes a candidate cell RS configuration indication, and the candidate cell RS configuration indication indicates a candidate cell RS configuration with which the communication device is configured, wherein the candidate cell RS configuration indicates time-frequency resources of one or more configured candidate cell RS(s), wherein each of the one or more configured candidate cell RS(s) has a same RS type. The circuitry, in operation: (i) determines that the candidate cell RS is the one configured candidate cell RS; and (ii) determines: (a) if a quasi co-location (QCL) RS associated with the current serving cell TCI state has a same RS type as the one configured candidate cell RS, that the serving cell RS is the QCL RS that is associated with the current serving cell TCI state, and (b) if the QCL RS associated with the current serving cell TCI state has a different RS type than the one configured candidate cell RS, that the serving cell RS is an QCL RS that is: associated with a serving cell TCI state, quasi co-located (QCLed) with the QCL RS associated with the current serving cell TCI state, and has the same RS type as the one or more configured candidate cell RS.

According to a fourteenth aspect a method for a communication device is provided. The method includes the steps of: (i) receiving a Layer 1/Layer 2 Triggered Mobility (LTM) control signalling; (ii) obtaining, from the LTM control signalling, an LTM trigger event configuration indication, wherein (a) the LTM trigger event configuration indication indicates an configuration of an LTM trigger event that involves reference signals (RS(s)), (b) the involved RS(s) include a serving cell RS and/or a candidate cell RS, (c) the serving cell RS is an RS of a serving cell of the communication device, (d) the candidate cell RS is an RS of an LTM candidate cell for an LTM cell switch of the communication device away from the serving cell; (e) the communication device is to transmit, when the involved RS(s) satisfy a trigger condition of the LTM trigger event, a layer 1 (L1) measurement report for LTM on measurement result(s) of the involved RS(s); (iii) determining, if the LTM trigger event involves the serving cell RS, the serving cell RS among configured RS(s) of the serving cell with which the communication device is configured based on (a) a serving cell RS indication included in the LTM trigger event configuration indication, and/or (b) a current serving cell TCI state, wherein the current serving cell TCI state is a TCI state that is currently used by the communication device in the serving cell; (iv) determining, if the LTM trigger event involves the candidate cell RS, the candidate cell RS among configured RS(s) of the candidate cell with which the communication device is configured based on (a) a candidate cell RS indication included in the LTM trigger event configuration indication, and/or (b) the current serving cell TCI state; (v) determining, by evaluating whether the determined serving cell and/or determined candidate cell RS satisfy the trigger condition, whether to transmit the L1 measurement report; and (vi) transmitting, if it is determined that the L1 measurement report is to be transmitted, the L1 measurement report.

Further (dependent) aspects are provided for the method according to the fourteenth aspect, corresponding to the steps performed in operation by the communication device provided by any one of the second to the thirteenth aspects.

According to a fifteenth aspect, a scheduling device provided. The scheduling device comprises circuitry and a transceiver. The circuitry, in operation, determines, for a communication device for which the scheduling device operates a serving cell, a configuration of an Layer 1/Layer 2 Triggered Mobility, (LTM) trigger event. In particular: (i) the LTM trigger event involves reference signals (RS(s)), (ii) the involved RS(s) include a serving cell RS and/or a candidate cell RS, (iii) the serving cell RS is an RS of a serving cell of the communication device, (iv) the candidate cell RS is an RS of an LTM candidate cell for an LTM cell switch of the communication device away from the serving cell, and (v)the communication device is to transmit, when the involved RS(s) satisfy a trigger condition of the LTM trigger event, a layer 1 (L1) measurement report for LTM on measurement result(s) of the involved RS(s). Furthermore, the circuitry, in operation, determines, if the LTM trigger event involves the serving cell RS: the serving cell RS among configured RS(s) of the serving cell with which the communication device is configured. In particular, the serving cell RS is to be determined by the communication device, based on (a) an serving cell RS indication, and/or (b) a current serving cell TCI state, wherein the current serving cell TCI state is a TCI state that is currently used by the communication device in the serving cell. Furthermore, the circuitry, in operation, determines, if the LTM trigger event involves the candidate cell RS, the candidate cell RS among configured RS(s) of the candidate cell with which the communication device is configured. In particular, the candidate cell RS is to be determined by the communication device based on (a) a candidate cell RS indication, and/or (b) the current serving cell TCI state. Furthermore, the circuitry, in operation, generates an LTM control signalling including an LTM trigger event configuration indication that indicates the configuration of the LTM trigger event, wherein the LTM trigger event configuration indication includes: (a) if the serving cell RS is to be determined by the communication de vice based on the serving cell RS indication, the serving cell RS indication; and (b) if the candidate cell RS is to be determined by the communication device based on the candidate cell RS indication, the candidate cell RS indication. The transceiver which, in operation, transmits the LTM control signalling.

According to a sixteenth aspect provided in addition to the fifteenth aspect: (i) the serving cell RS indication and/or the candidate cell RS indication includes a RS type indication; and (ii) the RS type indication indicates an RS type of the involved RS(s).

According to a seventeenth aspect provided in addition to the sixteenth aspect, if the LTM trigger event involves the serving cell RS: (i) the serving cell RS indication includes the RS type indication and a serving cell RS configuration indication; (ii) the serving cell RS configuration indication indicates a serving cell RS configuration with which the communication device is configured, wherein the serving cell RS configuration indicates, for each of two or more configured serving cell RS, respective time-frequency resources, the two or more configured serving cell RS have mutually different RS types and include a configured serving cell RS that is of the indicated RS type; and (iii) the (involved) serving cell RS is the configured serving cell RS that is of the indicated RS type.

According to an eighteenth aspect provided in addition to the sixteenth aspect, if the LTM trigger event involves the serving cell RS, the serving cell RS indication includes the RS type indication. Furthermore, (i) if a quasi co-location (QCL) RS associated with the current serving cell TCI state has the indicated RS type: the serving cell RS is the QCL RS associated with the current serving cell TCI state; and (ii) if the QCL RS associated with the current serving cell TCI state has a different RS type than the indicated RS type, the serving cell RS is an QCL RS that is: (a) associated with a serving cell TCI state, (b) quasi co-located, QCLed, with the QCL RS associated with the current serving cell TCI state, and (c) has the indicated RS type.

According to a nineteenth aspect, provided in addition to any of the sixteenth to the eighteenth aspect, if the LTM trigger event involves the candidate cell RS: (i) the candidate cell RS indication includes the RS type indication and a candidate cell RS configuration indication; (ii) the candidate cell RS configuration indication indicates a candidate cell RS configuration with which the communication device is configured, wherein the candidate cell RS configuration indicates, for each of two or more configured candidate cell RS, respective time-frequency resources, the two or more configured candidate cell RS have mutually different RS types and include a configured candidate cell RS that is of the indicated RS type; and (iii) the candidate cell RS is the configured candidate cell RS that is of the indicated RS type.

According to a 20th aspect, provided in addition to any of the sixteenth to the eighteenth aspect, if the LTM trigger event involves the candidate cell RS: (i) the candidate cell RS indication includes the RS type indication; and (ii) the candidate cell RS is an RS that has the indicated RS type and is a quasi co-location (QCL) RS associated with a candidate TCI state, wherein the candidate TCI state is a TCI state with which the communication device is configured for the LTM candidate cell.

According to a 21st aspect provided in addition to the fifteenth aspect, if the LTM trigger event involves the serving cell RS: (i) the serving cell RS indication includes a serving cell RS configuration indication; (ii) the serving cell RS configuration indication indicates a serving cell RS configuration with which the communication device is configured, wherein the serving cell RS configuration indicates time-frequency resources for one or more configured serving cell RS, wherein each of the one or more configured serving cell RS(s) has a same RS type; and (iii) the serving cell RS is one of the one or more configured serving cell RS.

According to an 22nd aspect provided in addition the 21st aspect, if the LTM trigger event involves the candidate cell RS: (i) the candidate cell RS indication includes a candidate cell RS configuration indication; (ii) the candidate cell RS configuration indication indicates a candidate cell RS configuration with which the communication device is configured, wherein the candidate cell RS configuration indicates time-frequency resources of one or more configured candidate cell RS(s), wherein each of the one or more configured candidate cell RS(s) has the same RS type; and (iii) the candidate cell RS is one of the one or more configured candidate cell RS.

According to a 23rd aspect provided in addition the 21st aspect, if the LTM trigger event involves the serving cell RS and the candidate cell RS: the candidate cell RS is a quasi co-location (QCL) RS associated with an candidate TCI state that has the same RS type as the one or more configured serving cell RS, wherein the candidate TCI state is a TCI state with which the communication device is configured for the LTM candidate cell.

According to a 24th aspect provided in addition to the fifteenth aspect, if the LTM trigger event involves the serving cell RS, the serving cell RS is a quasi co-location (QCL) RS that is associated with the current serving cell TCI state.

According to an 25th aspect provided in addition to the 24th aspect, if the LTM trigger event involves the serving cell RS and the candidate cell RS, the candidate cell RS is an RS that: (i) has a same RS type as the quasi co-location (QCL) RS that is associated with a current serving cell TCI state, and (ii) is an QCL RS associated with a candidate TCI state, wherein the candidate TCI state is a TCI state with which the communication device is configured for the LTM candidate cell.

According to a 26th aspect provided in addition to the 24th aspect, if the LTM trigger event involves the serving cell RS and the candidate cell RS: (i) the candidate cell RS indication includes a candidate cell RS configuration indication; (ii) the candidate cell RS configuration indication indicates a candidate cell RS configuration with which the communication device is configured; (iii) the candidate cell RS configuration indicates, for each of two or more configured candidate cell RS, respective time-frequency resources, the two or more configured candidate cell RS have mutually different RS types and include a configured candidate cell RS that has a same RS type as the QCL RS that is associated with the current serving cell TCI state; and (iv) the candidate cell RS is the configured candidate cell RS that has the same RS type as the QCL RS that is associated with the current serving cell TCI state.

According to a 27th aspect, provided in addition to the fifteenth aspect, if the LTM trigger event involves the candidate cell RS and the serving cell RS, the candidate cell RS indication includes a candidate cell RS configuration indication, and the candidate cell RS configuration indication indicates a candidate cell RS configuration with which the communication device is configured, wherein the candidate cell RS configuration indicates time-frequency resources of one or more configured candidate cell RS(s), wherein each of the one or more configured candidate cell RS(s) has a same RS type. Furthermore, the (involved) candidate cell RS is the one configured candidate cell RS; and (ii) determines: (a) if a quasi co-location (QCL) RS associated with the current serving cell TCI state has a same RS type as the one configured candidate cell RS, that the serving cell RS is the QCL RS that is associated with the current serving cell TCI state, and (b) if the QCL RS associated with the current serving cell TCI state has a different RS type than the one configured candidate cell RS, that the serving cell RS is an QCL RS that is: associated with a serving cell TCI state, quasi co-located (QCLed) with the QCL RS associated with the current serving cell TCI state, and has the same RS type as the one or more configured candidate cell RS.

According to a 28th aspect, a method for a scheduling device operating a serving cell of a communication device is provided. The method including the steps of: (i) determining, for the communication device, a configuration of an Layer 1/Layer 2 Triggered Mobility (LTM) trigger event, wherein (a) the LTM trigger event involves reference signals (RS(s)), (b) the involved RS(s) include a serving cell RS and/or a candidate cell RS, (c) the serving cell RS is an RS of a serving cell of the communication device, (d) the candidate cell RS is an RS of an LTM candidate cell for an LTM cell switch of the communication device away from the serving cell; (e) the communication device is to transmit, when the involved RS(s) satisfy a trigger condition of the LTM trigger event, a layer 1 (L1) measurement report for LTM on measurement result(s) of the involved RS(s); (ii) determining, if the LTM trigger event involves the serving cell RS, the serving cell RS among configured RS(s) of the serving cell with which the communication device is configured, wherein the serving cell RS is to be determined by the communication device based on: (a) an serving cell RS indication, and/or (b) a current serving cell TCI state, wherein the current serving cell TCI state is a TCI state that is currently used by the communication device in the serving cell; (iii) determining, if the LTM trigger event involves the candidate cell RS, the candidate cell RS among configured RS(s) of the candidate cell with which the communication device is configured, wherein the candidate cell RS is to be determined by the communication device based on: (a) an candidate cell RS indication, and/or (b) the current serving cell TCI state; (iv) generating an LTM control signalling including an LTM trigger event configuration indication that indicates the configuration of the LTM trigger event, wherein the LTM trigger event configuration indication includes: (a) if the serving cell RS is to be determined by the communication device based on the serving cell RS indication, the serving cell RS indication, and (b) if the candidate cell RS is to be determined by the communication device based on the candidate cell RS indication, the candidate cell RS indication; and (v) transmitting the LTM control signalling.

Further (dependent) aspects are provided for the method according to the 28th aspect, corresponding to the steps performed in operation by the scheduling device provided by any of the sixteenth to the 27th aspects.

According to a 29th aspect, an integrated circuit is provided (that may be deployed in a communication device, in particular user equipment). The integrated circuit, in operation, controls a process of a scheduling device, the process including the steps of: (i) receiving a Layer 1/Layer 2 Triggered Mobility (LTM) control signalling; (ii) obtaining, from the LTM control signalling, an LTM trigger event configuration indication, wherein (a) the LTM trigger event configuration indication indicates an configuration of an LTM trigger event that involves reference signals (RS(s)), (b) the involved RS(s) include a serving cell RS and/or a candidate cell RS, (c) the serving cell RS is an RS of a serving cell of the communication device, (d) the candidate cell RS is an RS of an LTM candidate cell for an LTM cell switch of the communication device away from the serving cell; (e) the communication device is to transmit, when the involved RS(s) satisfy a trigger condition of the LTM trigger event, a layer 1 (L1) measurement report for LTM on measurement result(s) of the involved RS(s); (iii) determining, if the LTM trigger event involves the serving cell RS, the serving cell RS among configured RS(s) of the serving cell with which the communication device is configured based on (a) a serving cell RS indication included in the LTM trigger event configuration indication, and/or (b) a current serving cell TCI state, wherein the current serving cell TCI state is a TCI state that is currently used by the communication device in the serving cell; (iv) determining, if the LTM trigger event involves the candidate cell RS, the candidate cell RS among configured RS(s) of the candidate cell with which the communication device is configured based on (a) a candidate cell RS indication included in the LTM trigger event configuration indication, and/or (b) the current serving cell TCI state; (v) determining, by evaluating whether the determined serving cell and/or determined candidate cell RS satisfy the trigger condition, whether to transmit the L1 measurement report; and (vi) transmitting, if it is determined that the L1 measurement report is to be transmitted, the L1 measurement report.

For instance, the integrated circuit according to the 29th aspect may comprise: an interface to a transceiver capable of receiving and transmitting signals; and circuitry configured (by hardware or software) to perform:
(i) configuring (or controlling), via said interface, the transceiver to receive the LTM control signalling;
(ii) obtaining, from the LTM control signalling, the LTM trigger event configuration indication (the LTM control signalling may e.g. also be received via said interface from the transceiver);
(iii) determining, if the LTM trigger event involves the serving cell RS, the serving cell RS among configured RS(s) of the serving cell with which the communication device is configured;
(iv) determining, if the LTM trigger event involves the candidate cell RS, the candidate cell RS among configured RS(s) of the candidate cell with which the communication device is configured;
(v) determining, by evaluating whether the determined serving cell and/or determined candidate cell RS satisfy the trigger condition, whether to transmit the L1 measurement report; and
(vi) if it is determined that the L1 measurement report is to be transmitted, configuring (or controlling), via said interface, the transceiver to transmit the L1 measurement report.

The integrated circuit of the 29th aspect may further implement the corresponding features of any of the second to the thirteenth aspects.

According to a 30th aspect, an integrated circuit is provided (that may be deployed in a scheduling device or a base station, in particular a gnB). The integrated circuit, in operation, controls a process of a base station, the process including the steps of: (i) determining, for the communication device, a configuration of an Layer 1/Layer 2 Triggered Mobility (LTM) trigger event, wherein (a) LTM trigger event involves reference signals (RS(s)), (b) the involved RS(s) include a serving cell RS and/or a candidate cell RS, (c) the serving cell RS is an RS of a serving cell of the communication device, (d) the candidate cell RS is an RS of an LTM candidate cell for an LTM cell switch of the communication device away from the serving cell; (e) the communication device is to transmit, when the involved RS(s) satisfy a trigger condition of the LTM trigger event, a layer 1 (L1) measurement report for LTM on measurement result(s) of the involved RS(s); (ii) determining, if the LTM trigger event involves the serving cell RS, the serving cell RS among configured RS(s) of the serving cell with which the communication device is configured, wherein the serving cell RS is to be determined by the communication device based on: (a) an serving cell RS indication, and/or (b) a current serving cell TCI state, wherein the current serving cell TCI state is a TCI state that is currently used by the communication device in the serving cell; (iii) determining, if the LTM trigger event involves the candidate cell RS, the candidate cell RS among configured RS(s) of the candidate cell with which the communication device is configured, wherein the candidate cell RS is to be determined by the communication device based on: (a) an candidate cell RS indication, and/or (b) the current serving cell TCI state; (iv) generating an LTM control signalling including an LTM trigger event configuration indication that indicates the configuration of the LTM trigger event, wherein the LTM trigger event configuration indication includes: (a) if the serving cell RS is to be determined by the communication device based on the serving cell RS indication, the serving cell RS indication, and (b) if the candidate cell RS is to be determined by the communication device based on the candidate cell RS indication, the candidate cell RS indication; and (v) transmitting the LTM control signalling.

For instance, the integrated circuit according to the 29th aspect may comprise: an interface to a transceiver capable of receiving and transmitting signals; and circuitry configured (by hardware or software) to perform:
(i) determining, for the communication device, a configuration of the LTM trigger event,);
(ii) determining, if the LTM trigger event involves the serving cell RS, the serving cell RS among configured RS(s) of the serving cell with which the communication device is configured;
(iii) determining, if the LTM trigger event involves the candidate cell RS, the candidate cell RS among configured RS(s) of the candidate cell with which the communication device is configured;
(iv) generating the LTM control signalling including the LTM trigger event configuration indication; and
(v) configuring (or controlling), via said interface, the transceiver to transmitting the LTM control signalling.

The integrated circuit of the 30th aspect may further implement the corresponding features of any of the sixteenth to the 27th aspects.

According to a 31th aspect, a program stored on a (non-transitory) storage medium and including code instructions, which, when executed on one or more processors of a user equipment, cause the one or more processors to execute the steps of any of the above mentioned methods (the fourteenth and the 28th aspects and their respective further aspects) is provided.

Summarizing, the present disclosure relates to a communication device, a base station and respective methods for a communication device and a base station. For example, the communication device comprises a circuitry and a transceiver. The circuitry, in operation, obtains, from a Layer 1/Layer 2 Triggered Mobility (LTM) control signalling, an LTM trigger event configuration indication. The LTM trigger event configuration indication indicates a configuration of an LTM trigger event that involves reference signals (RS(s)). The involved RS(s) include a serving cell RS and/or a candidate cell RS. The serving cell RS is an RS of a serving cell of the communication device. The candidate cell RS is an RS of an LTM candidate cell for an LTM cell switch of the communication device away from the serving cell. The communication device is to transmit, when the involved RS(s) satisfy a trigger condition of the LTM trigger event, a layer 1 (L1) measurement report for LTM on measurement result(s) of the involved RS(s). The circuitry determines, if the LTM trigger event involves the serving cell RS, the serving cell RS among configured RS(s) of the serving cell with which the communication device is configured based on (i) a serving cell RS indication included in the LTM trigger event configuration indication, and/or (ii) a current serving cell TCI state, wherein the current serving cell TCI state is a TCI state that is currently used by the communication device in the serving cell. Furthermore, the circuitry determines, if the LTM trigger event involves the candidate cell RS, the candidate cell RS among configured RS(s) of the candidate cell with which the communication device is configured based on (i) a candidate cell RS indication included in the LTM trigger event configuration indication, and/or (ii) the current serving cell TCI state. Furthermore, the circuitry determines, by evaluating whether the determined serving cell and/or determined candidate cell RS satisfy the trigger condition, whether to transmit the L1 measurement report. The transceiver, in operation, receives the LTM control signalling, and transmits, if it is determined that the L1 measurement report is to be transmitted, the L1 measurement report.

## Claims

1. A communication device, comprising:
circuitry which, in operation:
• obtains, from a Layer 1/Layer 2 Triggered Mobility, LTM, control signalling, an LTM trigger event configuration indication, wherein
∘ the LTM trigger event configuration indication indicates an configuration of an LTM trigger event that involves reference signals, RS(s),
∘ the involved RS(s) include a serving cell RS and/or a candidate cell RS,
∘ the serving cell RS is an RS of a serving cell of the communication device,
∘ the candidate cell RS is an RS of an LTM candidate cell for an LTM cell switch of the communication device away from the serving cell;
∘ the communication device is to transmit, when the involved RS(s) satisfy a trigger condition of the LTM trigger event, a layer 1, L1, measurement report for LTM on measurement result(s) of the involved RS(s);
• determines, if the LTM trigger event involves the serving cell RS, the serving cell RS among configured RS(s) of the serving cell with which the communication device is configured based on
∘ a serving cell RS indication included in the LTM trigger event configuration indication, and/or
∘ a current serving cell TCI state, wherein the current serving cell TCI state is a TCI state that is currently used by the communication device in the serving cell;
• determines, if the LTM trigger event involves the candidate cell RS, the candidate cell RS among configured RS(s) of the candidate cell with which the communication device is configured based on
∘ a candidate cell RS indication included in the LTM trigger event configuration indication, and/or
∘ the current serving cell TCI state;
• determines, by evaluating whether the determined serving cell and/or determined candidate cell RS satisfy the trigger condition, whether to transmit the L1 measurement report; and
a transceiver which, in operation,
• receives the LTM control signalling, and
• transmits, if it is determined that the L1 measurement report is to be transmitted, the L1 measurement report.

2. The communication device according to claim 1, wherein
the serving cell RS indication and/or the candidate cell RS indication includes a RS type indication; and
the RS type indication indicates an RS type of the involved RS(s).

3. The communication device according to claim 2, wherein, if the LTM trigger event involves the serving cell RS:
the serving cell RS indication includes the RS type indication and a serving cell RS configuration indication;
the serving cell RS configuration indication indicates a serving cell RS configuration with which the communication device is configured, wherein
the serving cell RS configuration indicates, for each of two or more configured serving cell RS, respective time-frequency resources,
the two or more configured serving cell RS have mutually different RS types and include a configured serving cell RS that is of the indicated RS type; and
the circuitry, in operation, determines that the serving cell RS is the configured serving cell RS that is of the indicated RS type.

4. The communication device according to claim 2, wherein, if the LTM trigger event involves the serving cell RS:
the serving cell RS indication includes the RS type indication; and
the circuitry, in operation, determines:
• if a quasi co-location, QCL, RS associated with the current serving cell TCI state has the indicated RS type, that the serving cell RS is the QCL RS associated with the current serving cell TCI state, and
• if the QCL RS associated with the current serving cell TCI state has a different RS type than the indicated RS type, that the serving cell RS is an QCL RS that is:
∘ associated with a serving cell TCI state,
∘ quasi co-located, QCLed, with the QCL RS associated with the current serving cell TCI state, and
∘ has the indicated RS type.

5. The communication device according to any of claims 2 to 4, wherein, if the LTM trigger event involves the candidate cell RS:
the candidate cell RS indication includes the RS type indication and a candidate cell RS configuration indication;
the candidate cell RS configuration indication indicates a candidate cell RS configuration with which the communication device is configured, wherein the candidate cell RS configuration indicates, for each of two or more configured candidate cell RS, respective time-frequency resources, the two or more configured candidate cell RS have mutually different RS types and include a configured candidate cell RS that is of the indicated RS type; and
the circuitry, in operation, determines that the candidate cell RS is the configured candidate cell RS that is of the indicated RS type.

6. The communication device according to claims 2 to 4, wherein, if the LTM trigger event involves the candidate cell RS:
the candidate cell RS indication includes the RS type indication; and
the circuitry, in operation, determines that the candidate cell RS is an RS that has the indicated RS type and is a quasi co-location, QCL, RS associated with a candidate TCI state, wherein the candidate TCI state is a TCI state with which the communication device is configured for the LTM candidate cell.

7. The communication device according to claim 1, wherein, if the LTM trigger event involves the serving cell RS:
the serving cell RS indication includes a serving cell RS configuration indication;
the serving cell RS configuration indication indicates a serving cell RS configuration with which the communication device is configured, wherein the serving cell RS configuration indicates time-frequency resources for one or more configured serving cell RS(s), wherein each of the one or more configured serving cell RS(s) has a same RS type; and
the circuitry, in operation, determines that the serving cell RS is one of the one or more configured serving cell RS.

8. The communication device according to claim 7, wherein, if the LTM trigger event involves the candidate cell RS:
the candidate cell RS indication includes a candidate cell RS configuration indication;
the candidate cell RS configuration indication indicates a candidate cell RS configuration with which the communication device is configured, wherein the candidate cell RS configuration indicates time-frequency resources of one or more configured candidate cell RS(s), wherein each of the one or more configured candidate cell RS(s) has the same RS type; and
the circuitry, in operation, determines that the candidate cell RS is one of the one or more configured candidate cell RS.

9. The communication device according to claim 7, wherein, if the LTM trigger event involves the serving cell RS and the candidate cell RS:
the circuitry, in operation, determines that the candidate cell RS is a quasi co-location, QCL RS associated with an candidate TCI state that has the same RS type as the one or more configured serving cell RS, wherein
the candidate TCI state is a TCI state with which the communication device is configured for the LTM candidate cell.

10. The communication device according to claim 1, wherein, if the LTM trigger event involves the serving cell RS:
the circuitry, in operation, determines that the serving cell RS is a quasi co-location, QCL, RS that is associated with the current serving cell TCI state.

11. The communication device according to claim 10, wherein, if the LTM trigger event involves the serving cell RS and the candidate cell RS:
the circuitry, in operation determines that the candidate cell RS is an RS that:
• has a same RS type as the quasi co-location, QCL RS that is associated with a current serving cell TCI state, and
• is an QCL RS associated with a candidate TCI state, wherein the candidate TCI state is a TCI state with which the communication device is configured for the LTM candidate cell.

12. The communication device according to claim 10, wherein, if the LTM trigger event involves the serving cell RS and the candidate cell RS:
the candidate cell RS indication includes a candidate cell RS configuration indication;
the candidate cell RS configuration indication indicates a candidate cell RS configuration with which the communication device is configured,
the candidate cell RS configuration indicates, for each of two or more configured candidate cell RS, respective time-frequency resources, the two or more configured candidate cell RS have mutually different RS types and include a configured candidate cell RS that has a same RS type as the QCL RS that is associated with the current serving cell TCI state; and
the circuitry, in operation, determines that the candidate cell RS is the configured candidate cell RS that has the same RS type as the QCL RS that is associated with the current serving cell TCI state.

13. The communication device according to claim 1, wherein, if the LTM trigger event involves the candidate cell RS and the serving cell RS:
the candidate cell RS indication includes a candidate cell RS configuration indication;
the candidate cell RS configuration indication indicates a candidate cell RS configuration with which the communication device is configured, wherein the candidate cell RS configuration indicates time-frequency resources of one or more configured candidate cell RS(s), wherein each of the one or more configured candidate cell RS(s) has a same RS type;
the circuitry, in operation:
• determines that the candidate cell RS is the one configured candidate cell RS; and
• determines:
∘ if a quasi co-location, QCL, RS associated with the current serving cell TCI state has a same RS type as the one configured candidate cell RS, that the serving cell RS is the QCL RS that is associated with the current serving cell TCI state, and
∘ if the QCL RS associated with the current serving cell TCI state has a different RS type than the one configured candidate cell RS, that the serving cell RS is an QCL RS that is:
▪ associated with a serving cell TCI state,
▪ quasi co-located, QCLed, with the QCL RS associated with the current serving cell TCI state, and
▪ has the same RS type as the one or more configured candidate cell RS.

14. A method for a communication device, the method including the steps of:
receiving a Layer 1/Layer 2 Triggered Mobility, LTM, control signalling,
obtaining, from the LTM control signalling, an LTM trigger event configuration indication, wherein
• the LTM trigger event configuration indication indicates an configuration of an LTM trigger event that involves reference signals, RS(s),
• the involved RS(s) include a serving cell RS and/or a candidate cell RS,
• the serving cell RS is an RS of a serving cell of the communication device,
• the candidate cell RS is an RS of an LTM candidate cell for an LTM cell switch of the communication device away from the serving cell;
• the communication device is to transmit, when the involved RS(s) satisfy a trigger condition of the LTM trigger event, a layer 1, L1, measurement report for LTM on measurement result(s) of the involved RS(s);
determining, if the LTM trigger event involves the serving cell RS, the serving cell RS among configured RS(s) of the serving cell with which the communication device is configured based on
• a serving cell RS indication included in the LTM trigger event configuration indication, and/or
• a current serving cell TCI state, wherein the current serving cell TCI state is a TCI state that is currently used by the communication device in the serving cell;
determining, if the LTM trigger event involves the candidate cell RS, the candidate cell RS among configured RS(s) of the candidate cell with which the communication device is configured based on
• a candidate cell RS indication included in the LTM trigger event configuration indication, and/or
• the current serving cell TCI state;
determining, by evaluating whether the determined serving cell and/or determined candidate cell RS satisfy the trigger condition, whether to transmit the L1 measurement report; and
transmitting, if it is determined that the L1 measurement report is to be transmitted, the L1 measurement report.

15. A scheduling device comprising:
circuitry which, in operation,
• determines, for a communication device for which the scheduling device operates a serving cell, a configuration of an Layer 1/Layer 2 Triggered Mobility, LTM, trigger event, wherein
∘ the LTM trigger event involves reference signals, RS(s),
∘ the involved RS(s) include a serving cell RS and/or a candidate cell RS,
∘ the serving cell RS is an RS of a serving cell of the communication device,
∘ the candidate cell RS is an RS of an LTM candidate cell for an LTM cell switch of the communication device away from the serving cell;
∘ the communication device is to transmit, when the involved RS(s) satisfy a trigger condition of the LTM trigger event, a layer 1, L1, measurement report for LTM on measurement result(s) of the involved RS(s);
• determines, if the LTM trigger event involves the serving cell RS, the serving cell RS among configured RS(s) of the serving cell with which the communication device is configured, wherein the serving cell RS is to be determined by the communication device based on
∘ an serving cell RS indication, and/or
∘ a current serving cell TCI state, wherein the current serving cell TCI state is a TCI state that is currently used by the communication device in the serving cell;
• determines, if the LTM trigger event involves the candidate cell RS, the candidate cell RS among configured RS(s) of the candidate cell with which the communication device is configured, wherein the candidate cell RS is to be determined by the communication device based on
∘ an candidate cell RS indication, and/or
∘ the current serving cell TCI state;
• generates an LTM control signalling including an LTM trigger event configuration indication that indicates the configuration of the LTM trigger event, wherein the LTM trigger event configuration indication includes:
∘ if the serving cell RS is to be determined by the communication device based on the serving cell RS indication, the serving cell RS indication; and
∘ if the candidate cell RS is to be determined by the communication device based on the candidate cell RS indication, the candidate cell RS indication; and
a transceiver which, in operation, transmits the LTM control signalling.
